# EUROPEAN PATENT APPLICATION

(11) **EP 4 701 288 A1**
(43) Date of publication of application: **25.02.2026**
(21) Application number: 23935992.0
(22) Date of filing: 08.05.2023
(51) Int. Cl.: H04W 56/00, H04B 7/185

(54) **SYNCHRONIZATION METHOD, COMMUNICATION DEVICE, AND STORAGE MEDIUM**

(71) Applicant: Shanghai Transsion Co., Ltd., Shanghai 201203 (CN)
(72) Inventor: HUANG, Chiunwei, Shanghai 201203 (CN); HUANG, Wei, Shanghai 201203 (CN)
(74) Representative: Osterhoff, Utz
(86) International application number: PCT/CN2023/092830
(87) International publication number: WO 2024/229664

(57) **Abstract**

The present application discloses a synchronization method, a communication device, and a storage medium. The synchronization method includes: performing, by a terminal device, synchronization based on configuration parameters and/or synchronization indication information. Through the technical solution of the present application, the terminal device performs synchronization based on configuration parameters and/or synchronization indication information, which can reduce unnecessary signaling overhead and/or handover delay.

## Description

### TECHNICAL FIELD

The present application relates to the technical field of communication, and in particular to a synchronization method, a communication device and a storage medium.

### BACKGROUND

Currently, a terminal device performs a service link switchover via Conditional Handover (CHO). After the conditional handover is completed, all conditional handover configurations are released, and the cell after handover is reconfigured with new conditional handover parameters.

During the conception and implementation of the present application, the inventors found that, in an Earth moving cell scenario, the moving speed of a terminal is relatively static with respect to a moving satellite. Even when the terminal device does not move, a handover is still required. And/or, during continuous service link switchover, the serving satellite may remain connected to the same ground station (Gateway) or base station (gNB), and many configurations remain unchanged. Resetting and/or reapplying the same configuration after each handover causes unnecessary signaling overhead and/or handover delay.

The preceding description is intended to provide general background information and does not necessarily constitute prior art.

### SUMMARY

The main purpose of the present application is to provide a synchronization method, a communication device and a storage medium, aiming to design a new synchronization method for mobile satellite scenarios, which can reduce unnecessary signaling overhead and/or switching delay.

The present application provides a synchronization method, which can be applied to a terminal device (such as a mobile phone), including the steps of:
S20, performing re-synchronization based on configuration parameters via a target satellite and a same base station.

Optionally, the configuration parameters include at least one of the following: re-synchronization condition parameters.

Optionally, the re-synchronization condition parameters include at least one of: at least one reference location of at least one neighboring cell, at least one distance threshold, and at least one ephemeris information.

Optionally, the S20 includes at least one of the following:
in response to that re-synchronization conditions are met, performing re-synchronization according to the re-synchronization parameters;
in response to that re-synchronization conditions are met, applying the handover parameters and performing re-synchronization via the re-synchronization parameters;
performing re-synchronization according to the re-synchronization parameters based on the re-synchronization indication information carrying a re-synchronization indicator;
applying the handover parameters and performing re-synchronization via the re-synchronization parameters based on the re-synchronization indication information carrying the re-synchronization indicator and index information; and
performing re-synchronization based on the configuration parameters and/or re-synchronization indication information and system information.

Optionally, the method further includes at least one of the following:
the re-synchronization indication information being sent via paging;
the re-synchronization being performing re-synchronization with a same base station; and
the performing re-synchronization based on the configuration parameters and/or re-synchronization indication information and system information includes at least one of the following:
   in response to that re-synchronization parameters are absent from the configuration parameters and the re-synchronization conditions are met, performing re-synchronization based on the system information; and
   in response to that the re-synchronization parameters are absent from the configuration parameters and a terminal device receives re-synchronization indication information, performing re-synchronization based on the system information.

Optionally, the method further includes at least one of the following:
the system information broadcasting the re-synchronization parameters and/or the handover parameters; and
the system information being sent via a serving satellite and/or a target satellite.

Optionally, the method further includes at least one of the following:
in response to that a measurement report indicates that no reporting is required and measurement conditions are met, sending, by a terminal device, a random access procedure and/or a scheduling request procedure and/or an uplink data to a target satellite;
reporting a measurement report according to the measurement report indication and receiving the re-synchronization indication information to perform re-synchronization;
a paging indicator being indicated by downlink control information (DCI) carrying a configuration index or identifier; and
paging message being indicated by the re-synchronization indicator and/or the configuration index.

The present application further provides a synchronization method, which is applicable to a network device (i.e., base station), including the steps of:
S10, sending configuration parameters and/or re-synchronization indication information so that a terminal device performs re-synchronization based on the configuration parameters and/or the re-synchronization indication information.

Optionally, the configuration parameters include at least one of the following: service link switchover parameters; common handover parameters; measurement configuration; re-synchronization condition parameters; re-synchronization parameters; handover parameters; and measurement report reporting indication.

Optionally, the re-synchronization condition parameters include at least one of: at least one reference location of at least one neighboring cell, at least one distance threshold, and at least one ephemeris information.

Optionally, the re-synchronization parameters include at least one of: a random access channel-less (RACH-Less) indication, a random access parameter, an uplink scheduling parameter, and a scheduling request resource; and
the configuration parameters being updated parameters or locally stored parameters.

Optionally, the terminal device performing re-synchronization based on the configuration parameters and/or the re-synchronization indication information includes at least one of the following:
in response to that re-synchronization conditions are met, performing re-synchronization according to the re-synchronization parameters;
in response to that re-synchronization conditions are met, applying the handover parameters and performing re-synchronization via the re-synchronization parameters;
performing re-synchronization according to the re-synchronization parameters based on the re-synchronization indication information carrying a re-synchronization indicator;
applying the handover parameters and performing re-synchronization via the re-synchronization parameters based on the re-synchronization indication information carrying the re-synchronization indicator and index information; and
performing re-synchronization based on the configuration parameters and/or re-synchronization indication information and system information.

Optionally, the method further includes at least one of the following:
the re-synchronization indication information being sent via paging;
the re-synchronization being performing re-synchronization with a same base station;
the system information broadcasting the re-synchronization parameters and/or the handover parameters;
the system information being sent via a serving satellite and/or a target satellite; and
the performing re-synchronization based on the configuration parameters and/or re-synchronization indication information and system information includes at least one of the following:
   in response to that re-synchronization parameters are absent from the configuration parameters and the re-synchronization conditions are met, performing re-synchronization based on the system information; and
   in response to that the re-synchronization parameters are absent from the configuration parameters and a terminal device receives re-synchronization indication information, performing re-synchronization based on the system information.

Optionally, the method further includes at least one of the following:
in response to that a measurement report indicates that no reporting is required and measurement conditions are met, sending, by a terminal device, a random access procedure and/or a scheduling request procedure and/or an uplink data to a target satellite;
reporting a measurement report according to the measurement report indication and receiving the re-synchronization indication information to perform re-synchronization;
a paging indicator being indicated by downlink control information (DCI) carrying a configuration index or identifier; and
paging message being indicated by the re-synchronization indicator and/or the configuration index.

The present application further provides a processing apparatus, including:
an execution module, configured to perform synchronization based on configuration parameters and/or synchronization indication information.

The present application further provides a processing apparatus, including:
a sending module, configured to send configuration parameters and/or synchronization indication information so that a terminal device performs synchronization based on the configuration parameters and/or the synchronization indication information.

The present application further provides a communication device, including: a memory, a processor, and a synchronization program stored in the memory and executable on the processor, and the synchronization program implements any one of the synchronization methods as described above when executed by the processor.

The communication device mentioned in the present application may be a terminal device (such as an intelligent terminal, specifically a cell phone), or a network device (such as a base station). The specific reference needs to be clarified based on the context.

The present application further provides a storage medium, a computer program is stored in the storage medium, and when the computer program is executed by a processor, any one of the synchronization methods as described above is implemented.

Through the technical solution of the present application, the terminal device performs synchronization based on configuration parameters and/or synchronization indication information, which can reduce unnecessary signaling overhead and/or switching delay.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those skilled in the art, other drawings can be obtained based on these drawings without exerting creative efforts.
FIG. 1 is a schematic diagram of hardware structure of a mobile terminal for implementing various embodiments of the present application.
FIG. 2 is a diagram of architecture of a communication network system according to an embodiment of the present application.
FIG. 3 is a schematic diagram of hardware structure of a controller 140 involved in a synchronization method according to an embodiment of the present application.
FIG. 4 is a schematic diagram of hardware structure of a network node 150 involved in the synchronization method according to an embodiment of the present application.
FIG. 5 is a schematic diagram of service link switchover in an earth moving cell scenario.
FIG. 6 is a schematic diagram of an example of service link switchover signaling process.
FIG. 7 is a schematic diagram of an interaction process between a terminal and a network device in a first embodiment of the synchronization method according to the present application.
FIG. 8 is a schematic diagram of a signaling flow according to a second embodiment of the synchronization method of the present application.
FIG. 9 is a schematic diagram of a signaling flow according to a third embodiment of the synchronization method of the present application.
FIG. 10 is a schematic diagram of an interaction process between a terminal and a network device according to a fifth embodiment of the synchronization method of the present application.
FIG. 11 is a schematic diagram of functional modules of a processing apparatus according to a sixth embodiment of the present application.
FIG. 12 is a schematic diagram of functional modules of a processing apparatus according to a seventh embodiment of the present application.
FIG. 13 is a schematic diagram of functional modules of a processing apparatus according to an eighth embodiment of the present application.
FIG. 14 is a schematic diagram of functional modules of a processing apparatus according to a ninth embodiment of the present application.

The realization of the purpose, functional features and advantages of the present application will be further described with reference to the embodiments and the accompanying drawings. Through the above-mentioned drawings, clear embodiments of the present application have been shown, which will be described in more detail below. These drawings and text descriptions are not intended to limit the scope of the present application's concepts in any way, but are intended to illustrate the present application's concepts for those skilled in the art with reference to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatus and methods consistent with aspects of the present application as detailed in the appended claims.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element. In addition, components, features, and elements with the same name in different embodiments of the present application may have the same or different meanings. Its specific meaning needs to be determined according to its explanation in the specific embodiment or further combined with the context in the specific embodiment.

It should be understood that although the terms first, second, third, etc. may be used herein to describe various information, the information should not be limited to these terms. These terms are only used to distinguish information of the same type from one another. For example, without departing from the scope of this document, first information may also be called second information, and similarly, second information may also be called first information. Depending on the context, the word "if" as used herein may be interpreted as "at" or "when" or "in response to a determination". Furthermore, as used herein, the singular forms "a", "an" and "the" are intended to include the plural forms as well, unless the context indicates otherwise. It should be further understood that the terms "comprising", "including" indicate the existence of features, steps, operations, elements, components, items, species, and/or groups, but does not exclude the existence, occurrence or addition of one or more other features, steps, operations, elements, components, items, species, and/or groups. The terms "or", "and/or", "comprising at least one of" and the like used in the present application may be interpreted as inclusive, or mean any one or any combination. For example, "comprising at least one of: A, B, C" means "any of: A; B; C; A and B; A and C; B and C; A and B and C". As another example, "A, B, or C" or "A, B, and/or C" means "any of the following: A; B; C; A and B; A and C; B and C; A and B and C". Exceptions to this definition will only arise when combinations of elements, functions, steps or operations are inherently mutually exclusive in some way.

**It** should be understood that although the various steps in the flowchart in the embodiment of the present application are displayed sequentially as indicated by the arrows, these steps are not necessarily executed sequentially in the order indicated by the arrows. Unless otherwise specified herein, there is no strict order restriction on the execution of these steps, and they can be executed in other orders. Moreover, at least some of the steps in the figure may include multiple sub-steps or multiple stages, these sub-steps or stages are not necessarily executed at the same time, but can be executed at different times. The execution sequence thereof is not necessarily performed sequentially, but may be performed alternately or alternately with at least one part of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (the stated condition or event)" could be interpreted as "when determined" or "in response to the determination" or "when detected (the stated condition or event)" or "in response to detection (the stated condition or event)".

It should be noted that in this article, step codes such as S10 and S20 are used for the purpose of expressing the corresponding content more clearly and concisely, and do not constitute a substantive limitation on the order. Those skilled in the art may perform S20 first and then S10 etc. during specific implementation, but these should all be within the protection scope of the present application.

It should be understood that the specific embodiments described here are only used to explain the present application, and are not intended to limit the present application.

In the following description, the use of suffixes such as "module", "part" or "unit" for denoting elements is only for facilitating the description of the present application and has no specific meaning by itself. Therefore, "module", "part" or "unit" may be used in combination.

The communication device, mentioned in the present application can be a terminal device (such as a mobile terminal, specifically a mobile phone) or a network device (such as a base station). The specific reference needs to be clarified in the context.

In an embodiment, the terminal device can be implemented in various forms. For example, the terminal device described in the present application can include a mobile phone, a tablet computer, a notepad computer, a hand-held computer, a personal digital assistant (PDA), a portable media player (PMP), a navigation device, a wearable device, a smart bracelet, a pedometer and other terminal devices, as well as a fixed terminal device such as a digital TV and a desktop computer.

The present application takes a mobile terminal as an example to illustrate. Those skilled in the art will understand that, in addition to elements specifically used for mobile purposes, the configuration according to the embodiments of the present application can also be applied to the fixed terminal device.

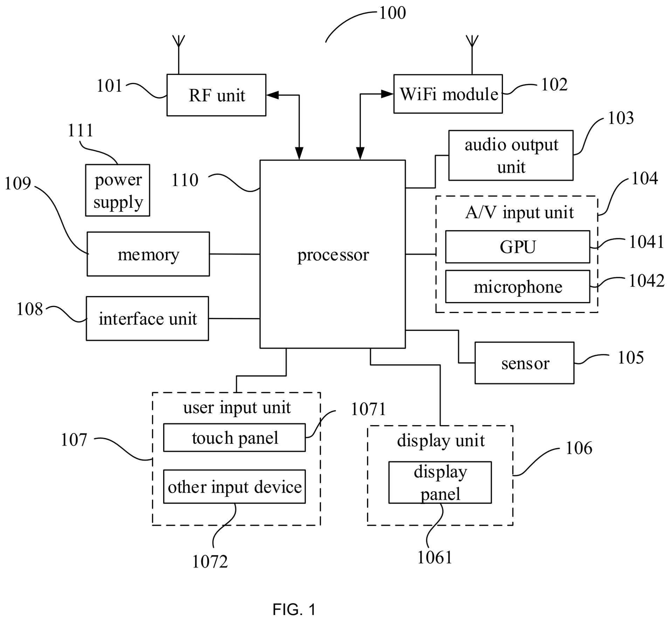

As shown in FIG. 1, FIG. 1 is a schematic structural diagram of a hardware of a mobile terminal that implements various embodiments of the present application. The mobile terminal 100 can include a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, a power supply 111 and other components. Those skilled in the art can understand that the structure of the mobile terminal shown in FIG. 1 does not constitute a limitation on the mobile terminal. The mobile terminal can include more or fewer components, or a combination of some components, or differently arranged components than shown in the figure.

Hereinafter, each component of the mobile terminal will be specifically introduced with reference to FIG. 1.

The radio frequency unit 101 can be used for transmitting and receiving signals during the process of transceiving information or talking. Specifically, after receiving the downlink information of the base station, the downlink information is processed by the processor 110; in addition, the uplink data is sent to the base station. Generally, the radio frequency unit 101 includes, but is not limited to, an antenna, at least one amplifier, a transceiver, a coupler, a low noise amplifier, a duplexer, and the like. In addition, the radio frequency unit 101 can also communicate with the network and other devices via wireless communication. The above-mentioned wireless communication can use any communication standard or protocol, including but not limited to Global System of Mobile communication (GSM), General Packet Radio Service (GPRS), Code Division Multiple Access 2000 (CDMA2000), Wideband Code Division Multiple Access (WCDMA), Time Division-Synchronous Code Division Multiple Access (TD-SCDMA), Frequency Division Duplexing-Long Term Evolution (FDD-LTE), Time Division Duplexing-Long Term Evolution (TDD-LTE), and 5G, or the like.

Wi-Fi is a short-range wireless transmission technology. The mobile terminal can help users send and receive email, browse webpage, and access streaming media via the Wi-Fi module 102, and Wi-Fi provides users with wireless broadband Internet access. Although FIG. 1 shows the Wi-Fi module 102, it is understandable that it is not a necessary component of the mobile terminal and can be omitted as needed without changing the essence of the present application.

When the mobile terminal 100 is in a call signal receiving mode, a call mode, a recording mode, a voice recognition mode, a broadcast receiving mode, or the like, the audio output unit 103 can convert the audio data received by the radio frequency unit 101 or the Wi-Fi module 102 or stored in the memory 109 into an audio signal and output the audio signal as sound. Moreover, the audio output unit 103 can further provide audio output related to a specific function performed by the mobile terminal 100 (for example, call signal reception sound, message reception sound, or the like). The audio output unit 103 can include a speaker, a buzzer, or the like.

The A/V input unit 104 is configured to receive audio or video signals. The A/V input unit 104 can include a graphics processing unit (GPU) 1041 and a microphone 1042. The graphics processing unit 1041 processes image data of still pictures or videos obtained by an image capture device (such as a camera) in a video capture mode or an image capture mode. The processed image frame can be displayed on the display unit 106. The image frame processed by the graphics processing unit 1041 can be stored in the memory 109 (or other storage medium) or sent via the radio frequency unit 101 or the Wi-Fi module 102. The microphone 1042 can receive sound (audio data) in operation modes such as a call mode, a recording mode, a voice recognition mode, and the like, and can process such sound into audio data. The processed audio (voice) data can be converted into a format that can be sent to a mobile communication base station via the radio frequency unit 101 in the case of a call mode for output. The microphone 1042 can implement various types of noise cancellation (or suppression) algorithms to eliminate (or suppress) noise or interference generated during the process of transceiving audio signals.

The mobile terminal 100 also includes at least one sensor 105, such as a light sensor, a motion sensor, and other sensors. Specifically, the light sensor includes an ambient light sensor and a proximity sensor. The ambient light sensor can adjust the brightness of the display panel 1061 according to the brightness of the ambient light. The proximity sensor can turn off the display panel 1061 and/or the backlight when the mobile terminal 100 is moved to the ear. A gravity acceleration sensor, as a kind of motion sensor, can detect the magnitude of acceleration in various directions (usually three axes). The gravity acceleration sensor can detect the magnitude and direction of gravity when it is stationary, and can identify the gesture of the mobile terminal (such as horizontal and vertical screen switching, related games, magnetometer attitude calibration), vibration recognition related functions (such as pedometer, tap), or the like. The mobile terminal can also be equipped with other sensors such as a fingerprint sensor, a pressure sensor, an iris sensor, a molecular sensor, a gyroscope, a barometer, a hygrometer, a thermometer, an infrared sensor and other sensors, which will not be repeated here.

The display unit 106 is configured to display information input by the user or information provided to the user. The display unit 106 can include a display panel 1061, and the display panel 1061 can be configured in the form of a liquid crystal display (LCD), an organic light emitting diode (OLED), or the like.

The user input unit 107 can be configured to receive inputted numeric or character information, and generate key signal input related to user settings and function control of the mobile terminal. Specifically, the user input unit 107 can include a touch panel 1071 and other input devices 1072. The touch panel 1071, also called a touch screen, can collect user touch operations on or near it (for example, the user uses fingers, stylus and other suitable objects or accessories to operate on the touch panel 1071 or near the touch panel 1071), and drive the corresponding connection device according to a preset program. The touch panel 1071 can include two parts: a touch detection device and a touch controller. The touch detection device detects the user's touch position, detects the signal brought by the touch operation, and transmits the signal to the touch controller. The touch controller receives the touch information from the touch detection device, converts the touch information into contact coordinates, and sends it to the processor 110, and can receive and execute the instructions sent by the processor 110. In addition, the touch panel 1071 can be implemented in multiple types such as resistive, capacitive, infrared, and surface acoustic wave. In addition to the touch panel 1071, the user input unit 107 can also include other input devices 1072. Specifically, the other input devices 1072 can include, but are not limited to, one or more of physical keyboard, function keys (such as volume control buttons, switch buttons, etc.), trackball, mouse, joystick, etc., which are not specifically limited here.

In an embodiment, the touch panel 1071 can cover the display panel 1061. After the touch panel 1071 detects a touch operation on or near it, the touch operation is transmitted to the processor 110 to determine the type of the touch event, and then the processor 110 provides a corresponding visual output on the display panel 1061 according to the type of the touch event. Although in FIG. 1, the touch panel 1071 and the display panel 1061 are used as two independent components to realize the input and output functions of the mobile terminal, in some embodiments, the touch panel 1071 and the display panel 1061 can be integrated to implement the input and output functions of the mobile terminal, which is not specifically limited here.

The interface unit 108 serves as an interface via which at least one external device can be connected to the mobile terminal 100. For example, the external device can include a wired or wireless earphone port, an external power source (or battery charger) port, a wired or wireless data port, a memory card port, a port for connecting devices with identification modules, an audio input/output (I/O) port, a video I/O port, an earphone port, or the like. The interface unit 108 can be configured to receive input (such as data information, electricity, or the like) from an external device and transmit the received input to one or more elements in the mobile terminal 100 or can be configured to transfer data between the mobile terminal 100 and the external device.

The memory 109 can be configured to store software programs and various data. The memory 109 can mainly include a program storage area and a data storage area. The program storage area can store the operating system, at least one application required by the function (such as sound play function, image play function, etc.), or the like. The data storage area can store data (such as audio data, phone book, etc.) created based on the use of the mobile phone. In addition, the memory 109 can include a highspeed random access memory, and can also include a non-volatile memory, such as at least one magnetic disk storage device, a flash memory device, or other volatile solid-state storage devices.

The processor 110 is a control center of the mobile terminal, and uses various interfaces and lines to connect the various parts of the entire mobile terminal. By running or performing the software programs and/or modules stored in the memory 109, and calling the data stored in the memory 109, various functions and processing data of the mobile terminal are executed, thereby overall monitoring of the mobile terminal is performed. The processor 110 can include one or more processing units; and the processor 110 may integrate an application processor and a modem processor. The application processor mainly processes an operating system, a user interface, an application, or the like, and the modem processor mainly processes wireless communication. It can be understood that the foregoing modem processor may not be integrated into the processor 110.

The mobile terminal 100 can also include a power source 111 (such as a battery) for supplying power to various components. The power supply 111 can be logically connected to the processor 110 via a power management system, so that functions such as charging, discharging, and power consumption management can be managed via the power management system.

Although not shown in FIG. 1, the mobile terminal 100 can also include a Bluetooth module, or the like, which will not be repeated herein.

In order to facilitate the understanding of the embodiments of the present application, the following describes the communication network system on which the mobile terminal of the present application is based.

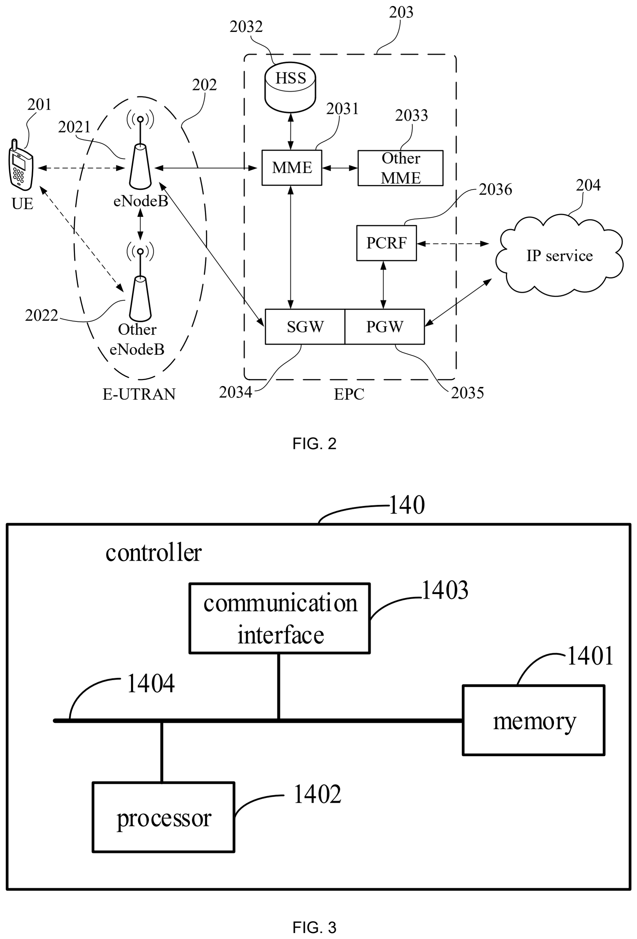

As shown in FIG. 2, FIG. 2 is an architecture diagram of a communication network system according to an embodiment of the present application. The communication network system is an LTE system of general mobile communication network technology. The LTE system includes a User Equipment (UE) 201, an Evolved UMTS Terrestrial Radio Access Network (E-UTRAN) 202, an Evolved Packet Core (EPC) 203, and an operator's IP service 204 that are sequentially connected in communication.

In an embodiment, the UE 201 can be the aforementioned terminal 100, which will not be repeated here.

E-UTRAN 202 includes eNodeB 2021 and other eNodeBs 2022. The eNodeB 2021 can be connected to other eNodeBs 2022 via a backhaul (for example, an X2 interface), the eNodeB 2021 is connected to the EPC 203, and the eNodeB 2021 can provide access from the UE 201 to the EPC 203.

The EPC 203 can include Mobility Management Entity (MME) 2031, Home Subscriber Server (HSS) 2032, other MMEs 2033, Serving Gate Way (SGW) 2034, PDN Gate Way (PGW) 2035, Policy and Charging Rules Function (PCRF) 2036, and so on. MME 2031 is a control node that processes signaling between UE 201 and EPC 203, and provides bearer and connection management. HSS 2032 is configured to provide some registers to manage functions such as the home location register (not shown), and save some user-specific information about service features, data rates, and so on. All user data can be sent via SGW 2034, PGW 2035 can provide UE 201 IP address allocation and other functions. PCRF 2036 is a policy and charging control policy decision point for service data flows and IP bearer resources, which selects and provides available policy and charging control decisions for policy and charging execution functional units (not shown).

The IP service 204 can include Internet, intranet, IP Multimedia Subsystem (IMS), or other IP services.

Although the LTE system is described above as an example, those skilled in the art should know that, the present application is not only applicable to the LTE system, but also applicable to other wireless communication systems, such as GSM, CDMA2000, WCDMA, TD-SCDMA, 5G and new network systems in the future (such as 6G), or the like, which is not limited herein.

Based on the above hardware structure of the mobile terminal and communication network system, various embodiments of the present application are provided.

FIG. 3 is a schematic diagram of the hardware structure of a controller 140 provided in the present application. The controller 140 includes: a memory 1401 and a processor 1402, the memory 1401 is used to store program instructions, and the processor 1402 is used to call the program instructions in the memory 1401 to execute the steps performed by the controller in the first embodiment of the above method, and its implementation principle and beneficial effects are similar, which will not be repeated here.

In an embodiment, the controller further includes a communication interface 1403, which can be connected to the processor 1402 via a bus 1404. The processor 1402 can control the communication interface 1403 to implement the receiving and sending functions of the controller 140.

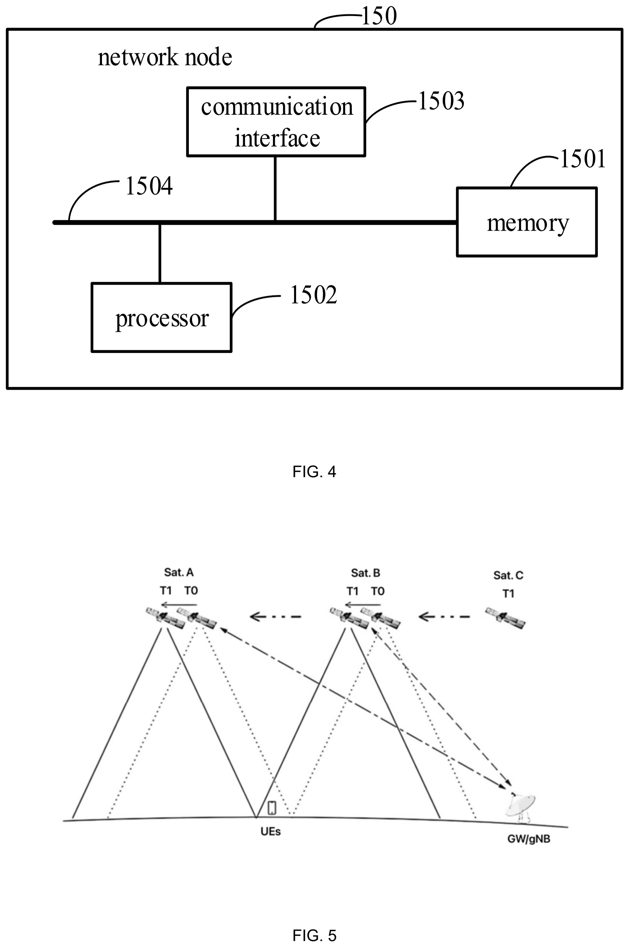

FIG. 4 is a schematic diagram of the hardware structure of a network node 150 provided by the present application. The network node 150 includes: a memory 1501 and a processor 1502, the memory 1501 is used to store program instructions, and the processor 1502 is used to call the program instructions in the memory 1501 to execute the steps performed by the first node in the first embodiment of the above method, and its implementation principle and beneficial effects are similar, which will not be repeated here.

**In** an embodiment, the controller further includes a communication interface 1503, which can be connected to the processor 1502 via a bus 1504. The processor 1502 can control the communication interface 1503 to implement the receiving and sending functions of the network node 150.

The above-mentioned integrated module implemented in the form of a software function module can be stored in a computer-readable storage medium. The above-mentioned software function module is stored in a storage medium, including a plurality of instructions for enabling a computer device (which can be a personal computer, a server, or a network device, etc.) or a processor to perform some steps of the methods of various embodiments of the present application.

Technical terms involved in the embodiments of the present application:
Conditional Handover (CHO);
Feeder Link;
Service Link;
Media Access Control Control Element (MAC CE);
Non Terrestrial Network (NTN);
Protocol Data Unit (PDU);
subheader;
Terrestrial Network (TN).

As shown in FIG. 5, FIG. 5 is a schematic diagram of service link switchover in an earth moving cell scenario.

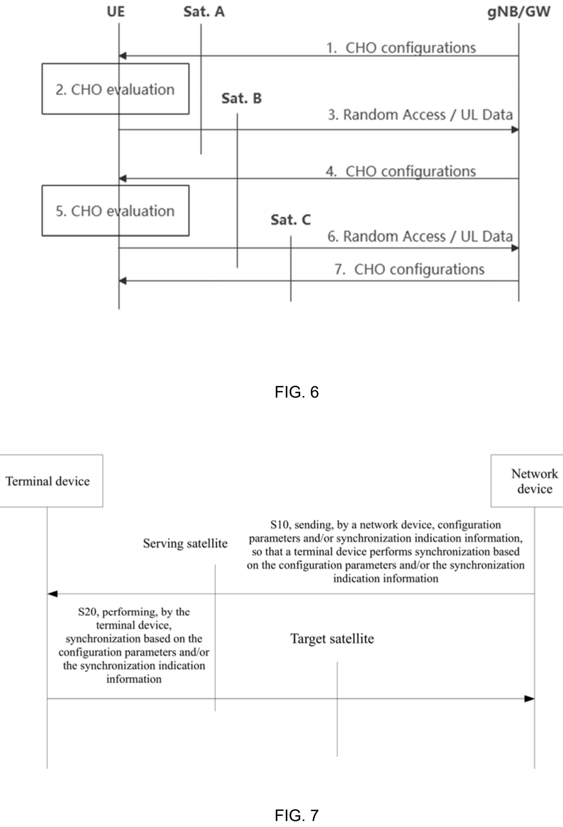

Currently, a terminal device performs a service link switchover via Conditional Handover (CHO). After the CHO is completed, all CHO configurations are released, and the cell after the handover is reconfigured with CHO parameters (refer to steps 4 and 7 in FIG. 6).

As shown in FIG. 5, in an Earth moving cell scenario, the movement speed of a terminal is relatively static with respect to a moving satellite. Even when the terminal device does not move, a handover is still required. And/or, during continuous service link switchovers, the serving satellite may remain connected to the same ground station (Gateway) or base station (gNB), and many configurations remain the same. After the handover, resetting and/or reapplying the same configuration causes unnecessary signaling overhead and/or handover delay.

At time point T0, a terminal device is served by satellite Sat. A. Optionally, Sat. A is connected to a ground station (GW, Gateway) or a base station gNB, and satellite Sat. B moves in the direction toward Sat. A.

From time point T0 to time point T1, Sat. A moves and no longer serves the terminal device, and is replaced by Sat. B. Sat. B is connected to the same ground station as the previous Sat. A. The terminal device performs a handover to a new base station according to the CHO and deletes the CHO parameters configured by the same base station.

Optionally, after the terminal device establishes a connection with the same base station via Sat. B, the same base station reconfigures corresponding CHO parameters for the terminal device, and the terminal device then performs CHO evaluation.

Optionally, Sat. A and Sat. B are two satellites in the same orbital.

Optionally, as Sat. A continues to move forward and Sat. B moves in the direction toward Sat. A, the terminal device performs a CHO again to the same base station (gNB). For example, the terminal device performs evaluation based on service link switchover and switches to Sat. B, where Sat. B is connected to the ground station GW, and many configurations remain the same. After the CHO is completed, all CHO configurations are released, and the cell after the handover is reconfigured with CHO parameters and/or reapplies the same configuration, causing unnecessary signaling overhead and/or handover delay. The specific signaling interaction process can refer to FIG. 6.

In the technical solution of the present application, a terminal device performs synchronization based on configuration parameters and/or synchronization indication information. Accordingly, a new handover method is designed for an earth moving cell scenario to reduce frequent configurations by network devices, which can reduce unnecessary signaling overhead and/or handover delay.

### First embodiment

As shown in FIG. 7, the first embodiment of the present application provides a synchronization method, including the following steps:
S10, sending, by a network device, configuration parameters and/or synchronization indication information, so that a terminal device performs synchronization based on the configuration parameters and/or the synchronization indication information;
S20, performing, by the terminal device, synchronization based on the configuration parameters and/or the synchronization indication information.

Optionally, a network device sends configuration parameters and/or synchronization indication information. After receiving the configuration parameters, a terminal device stores them locally and does not delete the configuration parameters after performing a handover until the network device modifies or releases them.

Optionally, after receiving the configuration parameters, a terminal device stores them locally and performs handover evaluation according to the configuration parameters. When the handover evaluation conditions are met, the terminal device performs a synchronization process.

Optionally, the synchronization process is a re-synchronization process, and the terminal device performs synchronization with the same base station via a new serving satellite. Optionally, the new serving satellite is a target satellite.

Optionally, the configuration parameters include at least one of the following: service link switchover parameters, common handover parameters, and measurement configuration.

Optionally, the configuration parameters include at least one of the following: synchronization condition parameters, synchronization parameters, handover parameters, and measurement report reporting indication.

Optionally, the synchronization condition parameters include at least one of the following: at least one reference location of at least one neighboring cell, at least one distance threshold, and at least one ephemeris information.

Optionally, the synchronization parameters include at least one of the following: a random access channel-less (RACH-Less) indication, a random access parameter, an uplink scheduling parameter, and a scheduling request resource.

Optionally, the configuration parameters are updated parameters or locally stored parameters.

Optionally, the terminal device stores the configuration parameters and does not delete the configuration parameters after performing a handover and/or synchronization.

Optionally, the locally stored configuration parameters by the terminal device include storing common configurations, where the common configurations may be any synchronization parameter and/or any handover parameter, and are not limited thereto.

Optionally, the configuration parameters may include any one or more of the above contents and do not necessarily include all items of one parameter type. For example, the configuration parameters may include at least one reference location of at least one neighboring cell, at least one distance threshold, and a random access parameter, and are not limited thereto.

Optionally, the handover parameters include configuration parameters required for handover to a target satellite. For example, the handover parameters may include RRC configuration parameters and/or RLC configuration parameters and/or MAC configuration parameters and/or physical layer configuration parameters. The specific handover configuration can refer to existing specification, such as the reconfigurationWithSync field configuration, which will not be further detailed herein.

Optionally, the handover parameters may be delta parameters, and a terminal device performs synchronization according to existing configurations and applies corresponding delta configurations.

Optionally, the common handover configuration includes common downlink configuration, common uplink configuration, and the like. For example, the configuration may refer to the ServingCellConfigCommon field configuration, which will not be further detailed herein.

Optionally, the common handover parameters include part of the contents of the handover parameters and are a subset of the handover parameters.

Optionally, the measurement configuration includes a measurement report reporting indication, a measurement object, a measurement event, and a report configuration. The specific configuration can refer to existing specification, which will not be further detailed herein.

Optionally, the configuration parameters are sent via RRC reconfiguration signaling and/or system information.

Optionally, part of the configuration parameters are sent via RRC reconfiguration signaling and another part of the configuration parameters are sent via system information. For example, the synchronization condition parameters are sent via RRC reconfiguration signaling, and the common handover parameters are sent via system information, and so on, which will not be further detailed herein.

Optionally, the synchronization indication information includes at least one of the following: RRC signaling, MAC signaling, and/or downlink control information (DCI). The RRC signaling includes at least one of the following: paging, broadcast, and groupcast.

Optionally, the MAC signaling includes at least one of the following: broadcast and groupcast, which are specifically identified and/or indicated via a MAC subheader and/or a MAC control element (MAC CE), or via both the MAC subheader and the MAC control element.

Optionally, the downlink control information includes at least one of the following: broadcast and groupcast, which are specifically identified and/or indicated via a newly introduced downlink control information format (DCI format) and/or a newly introduced radio network temporary identifier (RNTI) scrambling and/or descrambling, such as Broadcast-RNTI and Groupcast-RNTI.

Optionally, step S20 includes at least one of the following:
in response to that synchronization conditions are met, performing, by the terminal device, synchronization according to the synchronization parameters;
in response to that synchronization conditions are met, applying, by the terminal device, the handover parameters and performing synchronization via the synchronization parameters;
performing, by the terminal device, synchronization according to the synchronization parameters based on the synchronization indication information carrying a synchronization indicator;
applying, by the terminal device, the handover parameters and performing synchronization via the synchronization parameters based on the synchronization indication information carrying the synchronization indicator and index information; and
performing, by the terminal device, synchronization based on the configuration parameters and/or synchronization indication information and system information.

Optionally, the synchronization indication information is sent via paging.

Optionally, the synchronization is performing synchronization and/or re-synchronization with a same base station.

Optionally, the performing synchronization and/or re-synchronization is a handover method, for example, the terminal re-establishes a connection with the same base station via the target satellite.

The terminal device performs synchronization based on the configuration parameters and/or synchronization indication information and system information, including at least one of the following:
in response to that the synchronization parameters are absent from the configuration parameters and the synchronization conditions are met, the terminal device performs synchronization based on the system information;
in response to that the synchronization parameters are absent from the configuration parameters and the terminal device receives synchronization indication information, the terminal device performs synchronization based on the system information;
in response to that the handover parameters are absent from the configuration parameters and the synchronization conditions are met, the terminal device performs synchronization based on the system information;
in response to that the handover parameters are absent from the configuration parameters and the terminal device receives synchronization indication information, the terminal device performs synchronization based on the system information;
in response to that the common handover parameters are absent from the configuration parameters and the synchronization conditions are met, the terminal device performs synchronization based on the system information; and
in response to that the common handover parameters are absent from the configuration parameters and the terminal device receives synchronization indication information, the terminal device performs synchronization based on the system information.

Optionally, the synchronization parameters are absent from the configuration parameters when the network device does not configure any parameter in the synchronization parameters.

Optionally, the synchronization parameters are not configured via RRC reconfiguration signaling.

Optionally, the synchronization parameters are broadcast and/or configured via system information.

Optionally, the terminal device performs synchronization based on the system information by performing synchronization according to the synchronization parameters broadcast and/or configured via the system information. For example, the terminal device receives configuration information, where the configuration information includes synchronization condition parameters. The terminal device performs evaluation according to the synchronization condition parameters, and when the synchronization conditions are met, the terminal device performs synchronization according to the synchronization parameters broadcast via the system information.

Optionally, the terminal device receives synchronization indication information and performs synchronization according to the synchronization parameters broadcast via the system information.

Optionally, the terminal device receives the system information via a serving satellite and/or via a target satellite.

Optionally, the handover parameters are absent from the configuration parameters when the network device does not configure any parameter in the handover parameters.

Optionally, the handover parameters are not configured via RRC reconfiguration signaling.

Optionally, the handover parameters are broadcast and/or configured via system information.

Optionally, the terminal device performs synchronization based on the system information by performing synchronization according to the handover parameters broadcast and/or configured via the system information. For example, the terminal device receives configuration information, where the configuration information includes synchronization condition parameters. The terminal device performs evaluation according to the synchronization condition parameters, and when the synchronization conditions are met, the terminal device performs synchronization according to the handover parameters broadcast via the system information.

Optionally, the terminal device receives synchronization indication information and performs synchronization according to the handover parameters broadcast via the system information.

Optionally, the terminal device receives the system information via a serving satellite and/or via a target satellite.

Optionally, the common handover parameters are absent from the configuration parameters when the network device does not configure any parameter in the common handover parameters.

Optionally, the common handover parameters are not configured via RRC reconfiguration signaling.

Optionally, the common handover parameters are broadcast and/or configured via system information.

Optionally, the terminal device performs synchronization based on the system information by performing synchronization according to the common handover parameters broadcast and/or configured via the system information. For example, the terminal device receives configuration information, where the configuration information includes synchronization condition parameters. The terminal device performs evaluation according to the synchronization condition parameters, and when the synchronization conditions are met, the terminal device performs synchronization according to the common handover parameters broadcast via the system information.

Optionally, the terminal device receives synchronization indication information and performs synchronization according to the common handover parameters broadcast via the system information.

Optionally, the terminal device receives the system information via a serving satellite and/or via a target satellite.

Optionally, the synchronization conditions are met when the distance between the terminal device and a first reference location is greater than a first distance threshold and the distance between the terminal device and a second reference location is smaller than a second distance threshold.

Optionally, the synchronization conditions are met when the distance between the terminal device and an updated first reference location is greater than a first distance threshold and the distance between the terminal device and an updated second reference location is smaller than a second distance threshold.

Optionally, performing synchronization according to the synchronization parameters include performing synchronization based on current configurations.

Optionally, the system information broadcasts the synchronization parameters and/or handover parameters and/or common handover parameters.

Optionally, the system information is provided by the same base station.

Optionally, the synchronization is performed between a target satellite and a same base station.

Optionally, the reference location is updated via ephemeris information.

Optionally, in response to that a measurement report reporting indicates that no reporting is required and measurement conditions are met, the terminal device sends a random access procedure and/or a scheduling request procedure and/or uplink data to a target satellite.

Optionally, synchronization is performed by reporting a measurement report according to the measurement report reporting indication and receiving synchronization indication information.

Optionally, the paging is indicated via a paging indicator and/or a paging message.

Optionally, the synchronization parameters and/or handover parameters in the configuration parameters are distinguished by indexing.

Optionally, the paging indicator is indicated by downlink control information carrying a configuration index or identifier.

Optionally, the paging message is indicated by a synchronization indicator and/or a configuration index.

Optionally, the terminal device determines the synchronization parameters and/or handover parameters according to the index and performs synchronization using the corresponding synchronization parameters and/or handover parameters.

Optionally, the downlink control information is DCI 1-0 or a newly introduced downlink control information format.

Optionally, the broadcast signaling and/or groupcast signaling is a newly introduced RRC signaling. Optionally, the signaling is applicable in a connected state.

Optionally, the MAC signaling is a MAC PDU, and the MAC PDU includes at least one subPDU, where one subPDU includes a subheader and a control element (MAC CE, Control Element).

Optionally, the synchronization indication is carried via the subheader.

Optionally, the subheader indicates synchronization via an LCID (Logical Channel ID).

Optionally, the synchronization indication is carried via the MAC CE, and the synchronization is indicated via a bitmap or a codepoint.

Optionally, the configuration parameters further include a reset and/or reestablishment indication, and the terminal device performs reset and/or reestablishment according to the reset and/or reestablishment indication in the configuration parameters.

Optionally, the reset and/or reestablishment indication includes at least one of the following: a MAC reset indication, an RLC reestablishment indication, and a PDCP reestablishment indication.

Optionally, after synchronization is completed, MAC reset and/or RLC reestablishment and/or PDCP reestablishment is not performed.

Optionally, after synchronization is completed, a synchronization completion indication information is sent via one or more of RRC, MAC (for example, subheader and/or MAC CE), or UCI.

In the technical solution of this embodiment, a terminal device performs synchronization based on configuration parameters and/or synchronization indication information. Accordingly, a new handover method is designed for an earth moving cell scenario to reduce frequent configurations by network devices, which can reduce unnecessary signaling overhead and/or handover delay.

### Second embodiment

Based on any of the foregoing embodiments, a second embodiment of the present application provides a synchronization method. A network device delivers configuration parameters via RRC reconfiguration signaling, and a terminal device performs synchronization based on the configuration parameters.

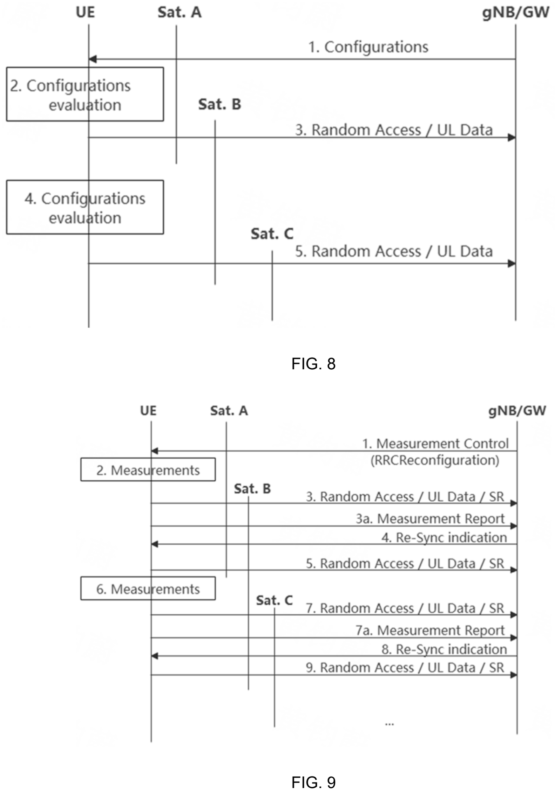

Taking the network device as a base station or ground station as an example, in this embodiment, the signaling process of configuring the parameters by the base station or ground station and performing synchronization by the terminal device can refer to FIG. 8.

As shown in FIG. 8, the signaling process includes:
1. The base station or ground station delivers configuration parameters via RRC reconfiguration signaling, and the RRC reconfiguration signaling is sent via Sat. A.

Optionally, the configuration parameters include at least one of the following: at least one reference location of at least one neighboring cell, at least one distance threshold, at least one ephemeris information, a random access channel-less (RACH-Less) indication, a random access parameter, an uplink scheduling parameter, and a scheduling request resource.

Optionally, the contents of the configuration parameters can be categorized by type, for example, the configuration parameters include at least one of the following: service link switchover parameters, common handover parameters, and measurement configurations.

Optionally, the configuration parameters further include at least one of the following: synchronization condition parameters, synchronization parameters, handover parameters, and measurement report reporting indications.

Optionally, the synchronization condition parameters include at least one of the following: at least one reference location of at least one neighboring cell, at least one distance threshold, and at least one ephemeris information.

Optionally, the synchronization parameters include at least one of the following: a random access channel-less indication, a random access parameter, an uplink scheduling parameter, and a scheduling request resource.

Optionally, the configuration parameters may include any of the above contents and are not necessarily required to include all contents in one parameter type. For example, the configuration parameters may include at least one reference location of a neighboring cell, at least one distance threshold, and a random access parameter, which is not limited herein.

Optionally, the handover parameters include configuration parameters required for switching to a target satellite, for example, RRC configuration parameters and/or RLC configuration parameters and/or MAC configuration parameters and/or physical layer configuration parameters, which may be implemented according to existing specification, for example, reconfigurationWithSync field configuration, which is not further detailed herein.

Optionally, the handover parameters may be delta parameters, and the terminal device performs synchronization based on the existing configuration and by applying corresponding delta configurations.

Optionally, the measurement configuration includes a measurement object, a measurement event, and a report configuration, which may be implemented with reference to existing specification and will not be further detailed herein.

After receiving the RRC reconfiguration signaling, the terminal device stores the configuration parameters locally.

2. After receiving the configuration and measurement parameters, the terminal device performs neighboring cell measurement, for example, Sat. B, including evaluating whether the distance between the location of the terminal device and a first reference location is greater than a first threshold and whether the distance between the location of the terminal device and a second reference location is smaller than a second threshold.

3. When at least one neighboring cell meets the measurement conditions, for example, Sat. B, the terminal device initiates a re-synchronization process, including initiating a random access procedure and/or uplink data transmission to the target Sat. B. After completing the re-synchronization process, the terminal device still retains the configuration parameters.

4. The terminal device continuously performs steps 1 to 3 and carries out evaluation and synchronization for subsequent arriving satellites, for example, Sat. C.

Optionally, the terminal device performing synchronization based on the configuration parameters include at least one of the following:
in response to that the synchronization conditions are met, performing synchronization according to the synchronization parameters;
in response to that the synchronization conditions are met, applying the handover parameters and performing synchronization via the synchronization parameters;
performing synchronization according to the synchronization parameters based on synchronization indication information carrying a synchronization indicator;
applying the handover parameters and performing synchronization via the synchronization parameters based on synchronization indication information carrying the synchronization indicator and index information; and
performing synchronization based on the configuration parameters and/or synchronization indication information and system information.

Optionally, the synchronization indication information is sent via paging.

Optionally, the synchronization is synchronization and/or re-synchronization performed with a same base station.

Optionally, the synchronization and/or re-synchronization is a type of handover, for example, the terminal re-establishes a connection with the same base station via a target satellite.

The terminal device performing synchronization based on the configuration parameters and/or synchronization indication information and system information includes at least one of the following:
in response to that synchronization parameters are absent from the configuration parameters and the synchronization conditions are met, performing synchronization based on the system information;
in response to that synchronization parameters are absent from the configuration parameters and the terminal device receives synchronization indication information, performing synchronization based on the system information;
in response to that handover parameters are absent from the configuration parameters and the synchronization conditions are met, performing synchronization based on the system information;
in response to that handover parameters are absent from the configuration parameters and the terminal device receives synchronization indication information, performing synchronization based on the system information;
in response to that common handover parameters are absent from the configuration parameters and the synchronization conditions are met, performing synchronization based on the system information; and
in response to that common handover parameters are absent from the configuration parameters and the terminal device receives synchronization indication information, performing synchronization based on the system information.

Optionally, the synchronization parameters absent from the configuration parameters means that the network device does not configure any of the synchronization parameters.

Optionally, the synchronization parameters are not configured via RRC reconfiguration signaling.

Optionally, the synchronization parameters are broadcast and/or configured via system information.

Optionally, the terminal device performing synchronization based on system information means that the terminal performs synchronization according to the synchronization parameters broadcast and/or configured by the system information. For example, the terminal device receives configuration information, the configuration information includes synchronization condition parameters, and the terminal device performs evaluation according to the synchronization condition parameters. In response to that the synchronization conditions are met, the terminal device performs synchronization according to the synchronization parameters broadcast by the system information.

Optionally, the terminal device receives synchronization indication information and performs synchronization according to the synchronization parameters broadcast by the system information.

Optionally, the terminal device receives system information via a serving satellite and/or via a target satellite.

Optionally, the handover parameters absent from the configuration parameters means that the network device does not configure any of the handover parameters.

Optionally, the handover parameters are not configured via RRC reconfiguration signaling.

Optionally, the handover parameters are broadcast and/or configured via system information.

Optionally, the terminal device performing synchronization based on system information means that the terminal performs synchronization according to the handover parameters broadcast and/or configured by the system information. For example, the terminal device receives configuration information, the configuration information includes synchronization condition parameters, and the terminal device performs evaluation according to the synchronization condition parameters. In response to that the synchronization conditions are met, the terminal device performs synchronization according to the handover parameters broadcast by the system information.

Optionally, the terminal device receives synchronization indication information and performs synchronization according to the handover parameters broadcast by the system information.

Optionally, the terminal device receives system information via a serving satellite and/or via a target satellite.

Optionally, the common handover parameters absent from the configuration parameters means that the network device does not configure any of the common handover parameters.

Optionally, the common handover parameters are not configured via RRC reconfiguration signaling.

Optionally, the common handover parameters are broadcast and/or configured via system information.

Optionally, the terminal device performing synchronization based on system information means that the terminal performs synchronization according to the common handover parameters broadcast and/or configured by the system information. For example, the terminal device receives configuration information, the configuration information includes synchronization condition parameters, and the terminal device performs evaluation according to the synchronization condition parameters. In response to that the synchronization conditions are met, the terminal device performs synchronization according to the common handover parameters broadcast by the system information.

Optionally, the terminal device receives synchronization indication information and performs synchronization according to the common handover parameters broadcast by the system information.

Optionally, the terminal device receives system information via a serving satellite and/or via a target satellite.

Optionally, the synchronization conditions being met includes that the distance between the terminal device and a first reference location is greater than a first distance threshold, and the distance between the terminal device and a second reference location is smaller than a second distance threshold.

Optionally, the synchronization conditions being met includes that the distance between the terminal device and an updated first reference location is greater than a first distance threshold, and the distance between the terminal device and an updated second reference location is smaller than a second distance threshold.

Optionally, performing synchronization according to the synchronization parameters include performing synchronization based on the current configuration.

Optionally, the system information broadcasts the synchronization parameters and/or the handover parameters and/or the common handover parameters.

Optionally, the system information is provided by the same base station.

Optionally, the synchronization is performed between a target satellite and a same base station.

Optionally, the reference location is updated according to ephemeris information.

Optionally, in response to that a measurement report reporting indication indicates that no reporting is required and the measurement conditions are met, the terminal device sends a random access procedure and/or a scheduling request procedure and/or uplink data to a target satellite.

Optionally, the terminal device reports a measurement report according to the measurement report reporting indication and performs synchronization by receiving synchronization indication information.

Optionally, the paging is indicated by a paging indicator and/or a paging message.

Optionally, the synchronization parameters and/or handover parameters in the configuration parameters are distinguished by an index.

Optionally, the paging indicator is indicated by downlink control information carrying a configuration index or identifier.

Optionally, the paging message is indicated by a synchronization indicator and/or a configuration index.

Optionally, the terminal device determines the synchronization parameters and/or handover parameters according to the index and performs synchronization using the corresponding synchronization parameters and/or handover parameters.

Optionally, the reference location includes a reference location of a current serving satellite and/or a reference location of an upcoming satellite.

Optionally, the upcoming satellite and the current serving satellite are on the same orbital.

Optionally, the current serving satellite and the upcoming satellite or the target satellite are connected to the same ground station or base station.

Optionally, in step 3, in response to that at least one neighboring cell meets the measurement conditions, the synchronization process initiated by the terminal device further includes at least one of the following:

performing random access according to the random access parameters in the configuration parameters;
performing random access-free access to the target satellite according to the RACH-Less indication in the configuration parameters;
acquiring system information by receiving system information broadcast by the previous serving satellite or the target satellite, and performing random access and/or applying handover parameters according to the random access parameters and/or handover parameters in the system information.

Optionally, after the terminal device hands over to the target satellite, it sends uplink data according to the uplink scheduling parameters in the configuration parameters.

Optionally, after the terminal device hands over to the target satellite, it sends a scheduling request according to the scheduling request resources in the pre-configuration parameters.

Optionally, the terminal device performs random access-free access to the target satellite and sends uplink data according to the RACH-Less indication and the uplink scheduling parameters in the configuration parameters.

Optionally, the terminal device performs random access-free access to the target satellite and sends a scheduling request according to the RACH-Less indication and the scheduling request resources in the configuration parameters.

Optionally, the configuration parameters are categorized by an index or identifier, for example, the configuration parameters are indicated by an index and/or an identity.

Optionally, the reference location is updated according to the configuration parameters, and the terminal device performs neighboring cell measurement according to the updated reference location information and distance threshold.

Optionally, the configuration parameters further include a PDCP re-establishment indication, a PDCP data recovery indication, an RLC re-establishment indication, and a MAC re-establishment indication.

Optionally, after the terminal device hands over to the target satellite, it performs PDCP re-establishment and/or PDCP data recovery and/or RLC re-establishment and/or MAC re-establishment according to the PDCP re-establishment, PDCP data recovery, RLC re-establishment, and MAC re-establishment indications in the configuration parameters.

Optionally, the terminal device performs random access-free access to the target satellite and performs PDCP re-establishment and/or PDCP data recovery and/or RLC re-establishment and/or MAC re-establishment according to the RACH-Less indication and the PDCP re-establishment, PDCP data recovery, RLC re-establishment, and MAC re-establishment indications in the pre-configuration parameters.

Optionally, the network device modifies or releases the configuration parameters via RRC reconfiguration signaling.

Optionally, the configuration parameters further include a reset indication, and the terminal device releases all configuration parameters according to the reset indication.

Optionally, the method further includes that the terminal device receives paging and performs re-synchronization according to the paging indicator.

Optionally, the paging may be downlink control information and/or a paging message carrying synchronization indication information and/or a configuration index.

Optionally, the paging indicates one or at least one terminal device to perform handover.

Optionally, the downlink control information carries synchronization indication information via a "Short Message indicator" and/or a "Short Message," and the terminal device performs handover to a target satellite according to the synchronization indication information.

Optionally, the paging message carries synchronization indication information, and the terminal device performs handover to a target satellite according to the synchronization indication information.

Optionally, the paging message further includes a paging record, and the terminal devices that need to perform synchronization are determined according to the synchronization indication information and the paging record, and the corresponding terminal devices perform handover to the target satellite.

Optionally, the terminal device performs handover to the target satellite according to the synchronization indication information and configuration parameters, and the specific steps are the same as those described above and are not repeated here.

Optionally, after the terminal device completes handover to the target satellite, it sends a handover completion signaling, which includes RRC signaling, MAC signaling, and uplink control information.

Optionally, the RRC signaling includes RRCReconfigurationComplete.

Optionally, the MAC signaling carries a handover completion indication via a subheader and/or a MAC CE.

Optionally, the MAC signaling includes at least one of broadcast and groupcast, and is specifically identified and/or indicated via a MAC subheader, identified and/or indicated via a MAC CE, or identified and/or indicated via both the MAC subheader and the MAC CE.

Optionally, the downlink control information includes at least one of broadcast and groupcast, and is specifically scrambled and/or descrambled via a newly introduced downlink control information format and/or a newly introduced Radio Network Temporary Identifier (RNTI), for example, Broadcast-RNTI or Groupcast-RNTI.

Optionally, the uplink control information carries a handover completion indication, and the uplink control information adopts an existing uplink control information format and/or a newly introduced uplink control information format, in which a handover completion indication is newly added.

Optionally, the synchronization is that the terminal device re-establishes a connection with the same base station via different satellites.

Optionally, before and after synchronization, the terminal device uses the same configuration, for example, Non-Access Stratum (NAS) configuration, RRC configuration, RLC configuration, MAC configuration, and physical layer configuration.

In the technical solution of this embodiment, the terminal device performs synchronization based on configuration parameters, thereby providing a new handover method designed for an earth moving cell scenario, reducing frequent configurations by network devices, and minimizing unnecessary signaling overhead and/or handover delay.

### Third embodiment

Based on any of the foregoing embodiments, a third embodiment of the present application provides a synchronization method. The network device delivers a measurement configuration and configuration parameters via RRC reconfiguration signaling, and the terminal device performs synchronization based on the measurement configuration and the configuration parameters.

Taking the network device as an example of a base station or a ground station, in this embodiment, the signaling process for the base station or ground station to configure parameters and for the terminal device to perform synchronization can refer to FIG. 9.

As shown in FIG. 9, the signaling process includes the following steps:
1. The base station or ground station delivers the measurement configuration and configuration parameters via RRC reconfiguration signaling, where the RRC reconfiguration signaling is sent via Sat. A.

Optionally, the measurement configuration includes at least one of the following: measurement report reporting indication, measurement event, measurement object, and report configuration. The details can refer to existing specification and are not further described herein.

Optionally, the configuration parameters include at least one of the following: service link switchover parameters, common handover parameters, and measurement configuration.

Optionally, the configuration parameters include at least one of the following: synchronization condition parameters, synchronization parameters, handover parameters, and measurement report reporting indication.

Optionally, the synchronization condition parameters include at least one of the following: at least one reference location of at least one neighboring cell, at least one distance threshold, and at least one ephemeris information.

Optionally, the synchronization parameters include at least one of the following: RACH-Less indication, random access parameters, uplink scheduling parameters, and scheduling request resources.

Optionally, the configuration parameters can include any of the above contents and do not necessarily include all elements of one parameter type. For example, the configuration parameters can include at least one reference location of at least one neighboring cell, at least one distance threshold, and random access parameters, without limitation.

Optionally, the handover parameters include configuration parameters required for handover to a target satellite, for example, RRC configuration parameters, RLC configuration parameters, MAC configuration parameters, and/or physical layer configuration parameters. The specific handover configuration can refer to existing specification, such as the reconfigurationWithSync field configuration, and is not further described herein.

Optionally, the handover parameters can be delta parameters, and the terminal device performs synchronization according to the existing configuration and by applying the corresponding delta configuration.

2. The terminal device receives the measurement configuration and configuration parameters, stores the measurement configuration locally, and performs measurement.

3. In response to at least one measurement object meeting the measurement conditions, the terminal device performs synchronization or reports a measurement report according to the measurement report reporting indication. In response to that the measurement report reporting indication indicates that no reporting is required or such an information element (IE) does not exist, the terminal device performs a synchronization procedure, for example, initiating a random access procedure and/or initiating a scheduling request and/or sending uplink data, while omitting step 3a, step 4, and step 5 below.

3a. In response to at least one measurement object meeting the measurement conditions, the terminal device performs synchronization or reports a measurement report according to the measurement report reporting indication. In response to that the measurement report reporting indication indicates that reporting is required, the terminal device reports a measurement report.

4. The network device sends a synchronization indication.

5. The terminal device performs synchronization according to the synchronization indication, for example, by initiating a random access procedure and/or initiating a scheduling request and/or sending uplink data.

6-9. Steps 3-5 are respectively repeated for subsequent arriving satellites, for example, B and C, to perform measurement and synchronization.

Optionally, the terminal device performs synchronization, including at least one of the following:
in response to that synchronization conditions are met, the terminal device performs synchronization according to the synchronization parameters;
in response to that synchronization conditions are met, the terminal device applies the handover parameters and performs synchronization via the synchronization parameters;
the terminal device performs synchronization according to the synchronization parameters based on the synchronization indication information carrying a synchronization indicator;
the terminal device applies the handover parameters and performs synchronization via the synchronization parameters based on the synchronization indication information carrying the synchronization indicator and index information;
the terminal device performs synchronization according to the configuration parameters and/or synchronization indication information and system information.

Optionally, the synchronization indication information is sent via paging.

Optionally, the synchronization is synchronization and/or re-synchronization with the same base station.

Optionally, the synchronization and/or re-synchronization is a type of handover, for example, the terminal device re-establishes a connection with the same base station via a target satellite.

The terminal device performs synchronization according to the configuration parameters and/or synchronization indication information and system information, including at least one of the following:
in response to that synchronization parameters are absent from the configuration parameters and synchronization conditions are met, the terminal device performs synchronization according to the system information;
in response to that synchronization parameters are absent from the configuration parameters and the terminal device receives synchronization indication information, the terminal device performs synchronization according to the system information;
in response to that handover parameters are absent from the configuration parameters and synchronization conditions are met, the terminal device performs synchronization according to the system information;
in response to that handover parameters are absent from the configuration parameters and the terminal device receives synchronization indication information, the terminal device performs synchronization according to the system information;
in response to that common handover parameters are absent from the configuration parameters and synchronization conditions are met, the terminal device performs synchronization according to the system information;
in response to that common handover parameters are absent from the configuration parameters and the terminal device receives synchronization indication information, the terminal device performs synchronization according to the system information.

Optionally, the synchronization parameters being absent from the configuration parameters means that the network device does not configure any of the synchronization parameters.

Optionally, the synchronization parameters are not configured via RRC reconfiguration signaling.

Optionally, the synchronization parameters are broadcast and/or configured via system information.

Optionally, the terminal device performs synchronization according to the system information by performing synchronization according to synchronization parameters broadcast and/or configured via system information, for example, the terminal device receives configuration information, the configuration information includes synchronization condition parameters, the terminal device performs evaluation according to the synchronization condition parameters, and in response to that the synchronization conditions are met, performs synchronization according to the synchronization parameters broadcast via the system information.

Optionally, the terminal device receives synchronization indication information and performs synchronization according to the synchronization parameters broadcast via system information.

Optionally, the terminal device receives system information via a serving satellite and/or via a target satellite.

Optionally, the handover parameters being absent from the configuration parameters means that the network device does not configure any of the handover parameters.

Optionally, the handover parameters are not configured via RRC reconfiguration signaling.

Optionally, the handover parameters are broadcast and/or configured via system information.

Optionally, the terminal device performs synchronization according to the system information by performing synchronization according to the handover parameters broadcast and/or configured via system information, for example, the terminal device receives configuration information, the configuration information includes synchronization condition parameters, the terminal device performs evaluation according to the synchronization condition parameters, and in response to that the synchronization conditions are met, performs synchronization according to the handover parameters broadcast via the system information.

Optionally, the terminal device receives synchronization indication information and performs synchronization according to the handover parameters broadcast via system information.

Optionally, the terminal device receives system information via a serving satellite and/or via a target satellite.

Optionally, the common handover parameters being absent from the configuration parameters means that the network device does not configure any of the common handover parameters.

Optionally, the common handover parameters are not configured via RRC reconfiguration signaling.

Optionally, the common handover parameters are broadcast and/or configured via system information.

Optionally, the terminal device performs synchronization according to the system information by performing synchronization according to the common handover parameters broadcast and/or configured via system information, for example, the terminal device receives configuration information, the configuration information includes synchronization condition parameters, the terminal device performs evaluation according to the synchronization condition parameters, and in response to that the synchronization conditions are met, performs synchronization according to the common handover parameters broadcast via the system information.

Optionally, the terminal device receives synchronization indication information and performs synchronization according to the common handover parameters broadcast via system information.

Optionally, the terminal device receives system information via a serving satellite and/or via a target satellite.

Optionally, the synchronization conditions being met include that a distance between the terminal device and a first reference location is greater than a first distance threshold, and a distance between the terminal device and a second reference location is smaller than a second distance threshold.

Optionally, the synchronization conditions being met include that a distance between the terminal device and an updated first reference location is greater than a first distance threshold, and a distance between the terminal device and an updated second reference location is smaller than a second distance threshold.

Optionally, performing synchronization according to the synchronization parameters include performing synchronization according to a current configuration.

Optionally, the system information broadcasts synchronization parameters and/or handover parameters and/or common handover parameters.

Optionally, the system information includes random access parameters.

Optionally, the system information is provided by the same base station.

Optionally, the synchronization is performed between a target satellite and a same base station.

Optionally, the reference location is updated according to ephemeris information.

Optionally, in response to that the measurement report reporting indicates that no reporting is required and the measurement conditions are met, the terminal device sends a random access procedure and/or a scheduling request procedure and/or uplink data to a target satellite.

Optionally, in response to that the measurement report reporting indicates that reporting is required, the terminal device reports the measurement report and performs synchronization according to the synchronization indication information.

Optionally, the paging is indicated via a paging indicator and/or a paging message.

Optionally, the synchronization parameters and/or handover parameters in the configuration parameters are distinguished by an index.

Optionally, the paging indicator is indicated via downlink control information carrying a configuration index or identifier.

Optionally, the paging message is indicated via synchronization indication and/or configuration index.

Optionally, the terminal device determines the synchronization parameters and/or handover parameters according to the index and performs synchronization using the corresponding synchronization parameters and/or handover parameters.

Optionally, the reference location includes a reference location of a current serving satellite and/or a reference location of an upcoming satellite.

Optionally, the upcoming satellite and the current serving satellite are in the same orbital.

Optionally, the current serving satellite and the upcoming satellite or the target satellite are connected to the same ground station or base station.

Optionally, in Step 3, the terminal device performs synchronization by switching to a target satellite according to the configuration parameters.

Optionally, in response to that at least one neighboring cell meets the measurement conditions, the synchronization performed by the terminal device further includes at least one of the following:
performing a random access procedure according to random access parameters in the configuration parameters;
performing a random-access-free procedure to a target satellite according to a random-access-free indication in the configuration parameters;
receiving system information broadcast by a previous serving satellite or a target satellite, acquiring the system information, and performing a random access procedure according to the random access parameters in the system information.

Optionally, after switching to the target satellite, the terminal device sends uplink data according to uplink scheduling parameters in the configuration parameters.

Optionally, after switching to the target satellite, the terminal device sends a scheduling request according to scheduling request resources in the pre-configuration parameters.

Optionally, the terminal device performs a random-access-free procedure to the target satellite and sends uplink data according to a random-access-free indication and uplink scheduling parameters in the configuration parameters.

Optionally, the terminal device performs a random-access-free procedure to the target satellite and sends a scheduling request according to a random-access-free indication and scheduling request resources in the configuration parameters.

Optionally, the configuration parameters are categorized by an index or identity, for example, the configuration parameters are indicated via an index and/or an identity.

Optionally, the reference location is updated according to the configuration parameters, and the terminal device performs neighboring cell measurement according to the updated reference location information and distance threshold. Optionally, the configuration parameters are ephemeris parameters.

Optionally, the configuration parameters further include a PDCP re-establishment indication and/or a PDCP data recovery indication and/or an RLC re-establishment indication and/or a MAC re-establishment indication.

Optionally, after switching to the target satellite, the terminal device performs PDCP re-establishment and/or PDCP data recovery and/or RLC re-establishment and/or MAC re-establishment according to the PDCP re-establishment indication and/or PDCP data recovery indication and/or RLC re-establishment indication and/or MAC re-establishment indication in the configuration parameters.

Optionally, the terminal device performs a random-access-free procedure to the target satellite and performs PDCP re-establishment and/or PDCP data recovery and/or RLC re-establishment and/or MAC re-establishment according to a random-access-free indication and PDCP re-establishment and/or PDCP data recovery and/or RLC re-establishment and/or MAC re-establishment indication in the configuration parameters.

Optionally, the network device modifies or releases the configuration parameters via an RRC reconfiguration message.

Optionally, the configuration parameters further include a reset indication, and the terminal device releases all configuration parameters according to the reset indication.

Optionally, the method further includes that the terminal device receives paging and performs re-synchronization according to the paging indicator.

Optionally, the paging is downlink control information and/or a paging message carrying synchronization indication information and/or a configuration index.

Optionally, the paging indicates that one or more terminal devices perform a handover.

Optionally, the downlink control information carries synchronization indication information via a "Short Message indicator" and/or a "Short Message," and the terminal device switches to the target satellite according to the synchronization indication information.

Optionally, the paging message carries synchronization indication information, and the terminal device switches to the target satellite according to the synchronization indication information.

Optionally, the paging message further includes a paging record, and the terminal device to perform synchronization is determined according to the synchronization indication information and the paging record, and the corresponding terminal device performs switching to the target satellite.

Optionally, the terminal device switches to the target satellite according to the synchronization indication information and configuration parameters, and the specific steps are the same as described above, which will not be repeated herein.

Optionally, the measurement configuration further includes a reference location of the current serving satellite, a reference location of an upcoming satellite, and ephemeris parameters.

Optionally, the terminal device updates the reference location of the current serving satellite and/or the upcoming satellite according to the ephemeris parameters and performs measurement based on the updated reference location.

Optionally, the synchronization indication information is carried via RRC signaling or downlink control information.

Optionally, the RRC signaling may be paging, broadcast, or groupcast.

Optionally, the paging is indicated by a paging indicator and/or a paging message.

Optionally, the paging indicator is indicated via downlink control information carrying a configuration index or identifier.

Optionally, the paging message is indicated via a synchronization indication and/or a configuration index.

Optionally, the network device indicates synchronization via a general broadcast signaling, which is a newly introduced RRC signaling applicable to the connected state.

Optionally, the network device indicates synchronization via a groupcast signaling, which is a newly introduced RRC signaling applicable to the connected state.

Optionally, the RRC signaling further carries indication information for MAC reset and/or RLC re-establishment and/or PDCP re-establishment.

Optionally, the downlink control information includes at least one of broadcast and groupcast, specifically identified and/or distinguished via a newly introduced DCI format and/or a newly introduced Radio Network Temporary Identifier (RNTI) scrambling and/or descrambling, for example, Broadcast-RNTI or Groupcast-RNTI.

Optionally, the downlink control information may be DCI 1-0, which indicates synchronization via a "Short Message indicator" or "Short Messages."

Optionally, the downlink control information may be another DCI format or a newly introduced DCI format carrying a synchronization indication.

Optionally, the RRC signaling and/or downlink control information may further carry a configuration index, and the terminal device performs synchronization according to the configuration index.

Optionally, the synchronization is performed by the terminal device to reestablish a connection with the same base station via different satellites.

Optionally, the terminal device uses the same configuration before and after performing synchronization, for example, Non-Access Stratum (NAS) configuration, RRC configuration, RLC configuration, MAC configuration, and physical layer configuration.

In the technical solution of the present embodiment, the terminal device performs synchronization based on the measurement configuration and configuration parameters. Accordingly, a new handover method is designed for the earth moving cell scenario, reducing frequent configurations by the network device and thereby decreasing unnecessary signaling overhead and/or handover delay.

### Fourth embodiment

Based on any of the foregoing embodiments, a fourth embodiment of the present application provides a synchronization method. The network device delivers measurement configuration parameters via an RRC reconfiguration signaling, and the terminal device performs synchronization based on the measurement configuration parameters.

Optionally, the network device sends measurement configuration parameters. After receiving the measurement configuration parameters, the terminal device stores the measurement configuration parameters locally and does not delete the measurement configuration parameters after performing handover until the network device modifies or releases the measurement configuration parameters.

Optionally, the measurement configuration parameters include at least one reference location of a neighboring cell and at least one distance threshold.

Optionally, the configuration parameters are updated parameters or locally stored parameters.

Optionally, the terminal device stores configuration parameters and does not delete the configuration parameters after performing handover and/or synchronization.

Optionally, the locally stored configuration parameters of the terminal device include common configuration parameters, the common configuration parameters may be any synchronization parameters and/or handover parameters, without limitation herein.

Optionally, performing synchronization by the terminal device based on the measurement configuration parameters include at least one of the following:
in response to that the measurement conditions are met, the terminal device obtains a system information and performs synchronization based on the system information;
in response to that the measurement conditions are met, the terminal device reports a measurement report and receives synchronization indication information and/or obtains a system information, and performs synchronization based on the synchronization indication information and/or the system information.

Optionally, the system information carries configuration parameters.

Optionally, the content of the configuration parameters may be classified by type. For example, the configuration parameters include at least one of the following: service link switchover parameters, common handover parameters, and measurement configuration.

Optionally, the configuration parameters further include at least one of the following: synchronization condition parameters, synchronization parameters, handover parameters, and measurement report reporting indication.

Optionally, the synchronization condition parameters include at least one of the following: at least one reference location of a neighboring cell, at least one distance threshold, and at least one ephemeris information.

Optionally, the synchronization parameters include at least one of the following: a random access-free indication, random access parameters, uplink scheduling parameters, and scheduling request resources.

Optionally, the configuration parameters may include any one or more of the above items and are not necessarily required to include all contents of a given type. For example, the configuration parameters may include at least one reference location of a neighboring cell, at least one distance threshold, and random access parameters, without limitation herein.

Optionally, the synchronization parameters and/or handover parameters in the configuration parameters are distinguished by an index.

Optionally, the handover parameters include configuration parameters required for handover to a target satellite. For example, the handover parameters include RRC configuration parameters and/or RLC configuration parameters and/or MAC configuration parameters and/or physical layer configuration parameters. The handover configuration may be implemented according to existing specification, for example, according to the reconfigurationWithSync field configuration, and will not be described in detail herein.

Optionally, the handover parameters may be delta parameters, and the terminal device performs synchronization according to existing configurations and applies the corresponding delta configurations.

Optionally, the measurement configuration includes measurement objects, measurement events, and report configurations, which may be implemented according to existing specification and will not be described in detail herein.

In the technical solution of the present application, the network device carries synchronization and/or handover configuration information via a system information, thereby reducing the need for the network device to send dedicate signaling individually to each terminal device, and reducing unnecessary signaling overhead and/or handover delay. Meanwhile, the terminal device performs handover based on the synchronization and/or handover configuration information carried by the system information, thereby reducing signaling reception and achieving reductions in unnecessary signaling overhead and/or handover delay and/or power consumption.

### Fifth embodiment

Based on any of the foregoing embodiments, a fifth embodiment of the present application provides a synchronization method. The network device delivers measurement configuration parameters via an RRC reconfiguration message, and the terminal device performs synchronization based on the measurement configuration parameters.

Optionally, the network device sends the measurement configuration parameters, and the terminal device stores the received measurement configuration parameters locally and does not delete the measurement configuration parameters after performing a handover until the network device modifies or releases the parameters.

Optionally, the measurement configuration parameters include at least one of the following: at least one reference location of a neighboring cell, at least one distance threshold, at least one ephemeris information, and a measurement report reporting indication.

Optionally, the measurement configuration parameters further include a measurement report reporting indication, measurement objects, measurement events, and report configurations, which may be implemented according to existing specification and will not be described in detail herein.

Optionally, the measurement report reporting indication is used to indicate whether the terminal device needs to report a measurement report.

Optionally, performing synchronization by the terminal device based on the measurement configuration parameters include at least one of the following:
in response to that the measurement conditions are met, the terminal device obtains a system information and performs synchronization based on the system information;
in response to that the measurement conditions are met, the terminal device reports a measurement report according to the measurement report reporting indication and receives synchronization indication information and/or obtains a system information, and performs synchronization based on the synchronization indication information and/or the system information.

Optionally, the synchronization and/or re-synchronization is a type of handover. For example, the terminal device re-establishes a connection with the same base station via a target satellite.

Optionally, the system information carries configuration parameters.

Optionally, the configuration parameters include at least one of the following: service link switchover parameters and common handover parameters.

Optionally, the configuration parameters include at least one of the following: synchronization condition parameters, synchronization parameters, and handover parameters.

Optionally, the synchronization parameters include at least one of the following: a random access-free (RACH-Less) indication, random access parameters, uplink scheduling parameters, and scheduling request resources.

Optionally, the configuration parameters may include any one or more of the above items and are not necessarily required to include all contents of a given type. For example, the configuration parameters may include common handover parameters and synchronization condition parameters, without limitation herein.

Optionally, the handover parameters include configuration parameters required for performing a handover to a target satellite, for example, RRC configuration parameters and/or RLC configuration parameters and/or MAC configuration parameters and/or physical layer configuration parameters. The handover configuration may be implemented according to existing specification, for example, the configuration of the reconfigurationWithSync field, which will not be described in detail herein.

Optionally, the handover parameters may be delta parameters, and the terminal device performs synchronization based on the existing configuration and applies the corresponding delta configuration.

Optionally, the common handover parameters include common downlink configurations, common uplink configurations, and the like. For example, the configuration of the ServingCellConfigCommon field may be referred to, which will not be described in detail herein.

Optionally, performing synchronization based on the system information includes the terminal device applying handover parameters and/or performing synchronization based on synchronization parameters.

Optionally, performing synchronization based on the synchronization indication information and/or the system information includes at least one of the following:
the synchronization indication information carries synchronization parameters, and the terminal device performs synchronization based on the synchronization parameters;
the synchronization indication information carries handover parameters, and the terminal device applies the handover parameters to perform synchronization;
the synchronization indication information carries common handover parameters, and the terminal device applies the common handover parameters to perform synchronization;
the synchronization indication information carries synchronization parameters and the system information carries handover parameters, and the terminal device applies the handover parameters and performs synchronization based on the synchronization parameters;
the synchronization indication information carries synchronization parameters and the system information carries common handover parameters, and the terminal device applies the common handover parameters and performs synchronization based on the synchronization parameters;
the synchronization indication information carries handover parameters and the system information carries synchronization parameters, and the terminal device applies the handover parameters and performs synchronization based on the synchronization parameters;
the synchronization indication information carries common handover parameters and the system information carries synchronization parameters, and the terminal device applies the common handover parameters and performs synchronization based on the synchronization parameters.

Optionally, the synchronization indication information is sent via paging.

Optionally, the synchronization is synchronization and/or re-synchronization with the same base station.

Optionally, the terminal device receives the system information via a serving satellite and/or via a target satellite.

Optionally, the terminal device performs neighboring cell measurement according to the measurement configuration parameters. In response to that at least one neighboring cell meets the measurement conditions, the terminal device autonomously performs synchronization or performs synchronization according to the indication of the network device.

Optionally, meeting the measurement conditions includes that a distance between the terminal device and a first reference location is greater than a first distance threshold and a distance between the terminal device and a second reference location is smaller than a second distance threshold.

Optionally, meeting the measurement conditions includes that a distance between the terminal device and an updated first reference location is greater than a first distance threshold and a distance between the terminal device and an updated second reference location is smaller than a second distance threshold.

Optionally, the terminal device obtains an updated first reference location and/or an updated second reference location based on ephemeris information and the first reference location and/or the second reference location.

Optionally, the terminal device autonomously performing synchronization includes that the measurement report reporting indication specifies no need for reporting and the measurement conditions are met, and the terminal device directly performs a random access procedure and/or a scheduling request procedure to a target satellite and/or sends uplink data.

Optionally, performing synchronization according to the indication of the network device includes reporting a measurement report according to the measurement report reporting indication and performing synchronization in response to receiving synchronization indication information.

Optionally, the synchronization indication information is sent via at least one of the following: Radio Resource Control (RRC) signaling, Media Access Control (MAC) signaling, and Downlink Control Information (DCI).

Optionally, the RRC signaling includes at least one of the following: paging, broadcast, and groupcast.

Optionally, the paging is indicated via a paging indicator and/or a paging message.

Optionally, the paging indicator is indicated via Downlink Control Information carrying a configuration index or an identifier.

Optionally, the paging message indicates synchronization and/or a configuration index.

Optionally, the Downlink Control Information includes at least one of broadcast and groupcast, and is specifically scrambled and/or descrambled via a newly introduced Downlink Control Information format (DCI format) and/or a newly introduced Radio Network Temporary Identifier (RNTI), for example, Broadcast-RNTI or Groupcast-RNTI.

Optionally, the Downlink Control Information is DCI 1-0 or a newly introduced Downlink Control Information format.

Optionally, the broadcast signaling and/or groupcast signaling is newly introduced RRC signaling, and optionally, the signaling is applicable to a connected state.

Optionally, the MAC signaling includes at least one of broadcast and groupcast, and is specifically identified and/or indicated via a MAC subheader, a MAC CE, or both the MAC subheader and the MAC CE.

Optionally, the MAC signaling is a MAC PDU, the MAC PDU includes at least one subPDU, and one subPDU includes a subheader and a control element (MAC CE, Control Element).

Optionally, the synchronization indication is carried via the subheader, and optionally, the subheader indicates synchronization via an LCID (Logical Channel Identifier).

Optionally, the synchronization indication is carried via the MAC CE and indicates synchronization via a bitmap or a codepoint.

Optionally, the synchronization indication further includes a RACH-Less indication, and the terminal device performs RACH-Less access according to the RACH-Less indication.

Optionally, the synchronization is synchronization and/or re-synchronization with the same base station.

Optionally, the configuration parameters further include re-establishment and/or reset indication, and the network device sends the re-establishment and/or reset indication. The terminal device performs re-establishment and/or reset according to the re-establishment and/or reset indication in the configuration parameters.

Optionally, the re-establishment and/or reset indication includes at least one of a MAC reset indication, an RLC re-establishment indication, and a PDCP re-establishment indication.

Optionally, after the synchronization is completed, no MAC reset and/or RLC re-establishment and/or PDCP re-establishment is performed.

Optionally, after the synchronization is completed, a synchronization completion indication information is sent via one or more of RRC, MAC (for example, subheader and/or MAC CE), and UCI.

In the technical solution of this embodiment, the network device reduces the size of dedicate signaling and/or broadcasts common configurations by signaling segmentation, thereby reducing signaling overhead and/or frequent configuration. The terminal device reduces signaling reception size and frequency of signaling reception based on broadcast information and/or received dedicate signaling, thereby reducing power consumption and/or handover delay. Accordingly, a new handover method is designed for the earth moving cell scenario to reduce frequent configuration of the network device and minimize unnecessary signaling overhead and/or handover delay.

### Sixth embodiment

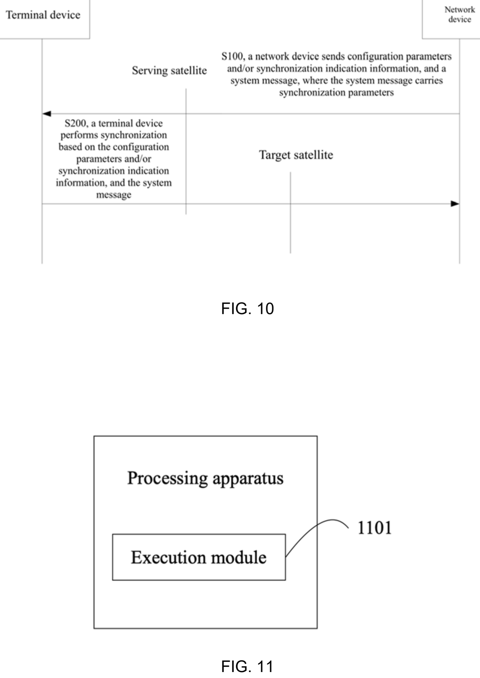

As shown in FIG. 10, a sixth embodiment of the present application provides a synchronization method, including the following steps:
S100, a network device sends configuration parameters and/or synchronization indication information, and a system information, where the system information carries synchronization parameters; and
S200, a terminal device performs synchronization based on the configuration parameters and/or synchronization indication information, and the system information.

Optionally, the network device sends configuration parameters and/or synchronization indication information, and a system information carrying synchronization parameters. The terminal device stores the synchronization parameters locally after receiving them, and does not delete the synchronization parameters after performing handover until the network device modifies or releases them.

Optionally, after receiving the configuration parameters and synchronization parameters, the terminal device stores them locally and performs handover evaluation based on the configuration parameters and synchronization parameters. In response to that the handover evaluation conditions are met, the terminal device performs a synchronization process.

Optionally, the synchronization process is a re-synchronization process, and the terminal device performs synchronization with the same base station via a new serving satellite.

Optionally, the synchronization and/or re-synchronization is a type of handover, for example, the terminal device re-establishes a connection with the same base station via a target satellite.

Optionally, the terminal device performs synchronization based on the configuration parameters and/or synchronization indication information, and the system information, including at least one of the following:
in response to that synchronization parameters are absent in the configuration parameters and synchronization conditions are met, the terminal device performs synchronization based on the system information;
in response to that synchronization parameters are absent in the configuration parameters and the terminal device receives synchronization indication information, the terminal device performs synchronization based on the system information.

In response to that handover parameters are absent in the configuration parameters and synchronization conditions are met, the terminal device performs synchronization based on the system information.

In response to that handover parameters are absent in the configuration parameters and the terminal device receives synchronization indication information, the terminal device performs synchronization based on the system information.

In response to that common handover parameters are absent in the configuration parameters and synchronization conditions are met, the terminal device performs synchronization based on the system information.

In response to that common handover parameters are absent in the configuration parameters and the terminal device receives synchronization indication information, the terminal device performs synchronization based on the system information.

Optionally, absent synchronization parameters in the configuration parameters means that the base station does not configure any parameters among the synchronization parameters.

Optionally, the synchronization parameters are not configured via RRC reconfiguration signaling.

Optionally, the synchronization parameters are broadcast and/or configured via system information.

Optionally, performing synchronization based on the system information means that the terminal device performs synchronization according to the synchronization parameters broadcast and/or configured via the system information. For example, the terminal device receives configuration information, where the configuration information includes synchronization condition parameters. The terminal device performs evaluation based on the synchronization condition parameters, and in response to that the synchronization conditions are met, the terminal device performs synchronization according to the synchronization parameters broadcast in the system information.

Optionally, the terminal device receives synchronization indication information and performs synchronization according to the synchronization parameters broadcast in the system information.

Optionally, the terminal device receives the system information via a serving satellite and/or a target satellite.

Optionally, absent handover parameters in the configuration parameters means that the network device does not configure any parameters among the handover parameters.

Optionally, the handover parameters are not configured via RRC reconfiguration signaling.

Optionally, the handover parameters are broadcast and/or configured via system information.

Optionally, performing synchronization based on the system information means that the terminal device performs synchronization according to the handover parameters broadcast and/or configured via the system information. For example, the terminal device receives configuration information, where the configuration information includes synchronization condition parameters. The terminal device performs evaluation based on the synchronization condition parameters, and in response to that the synchronization conditions are met, the terminal device performs synchronization according to the handover parameters broadcast in the system information.

Optionally, the terminal device receives synchronization indication information and performs synchronization according to the handover parameters broadcast in the system information.

Optionally, the terminal device receives the system information via a serving satellite and/or a target satellite.

Optionally, absent common handover parameters in the configuration parameters means that the network device does not configure any parameters among the common handover parameters.

Optionally, the common handover parameters are not configured via RRC reconfiguration signaling.

Optionally, the common handover parameters are broadcast and/or configured via system information.

Optionally, performing, by the terminal device, synchronization based on the system information means that the terminal device performs synchronization according to the common handover parameters broadcast and/or configured via the system information. For example, the terminal device receives configuration information, where the configuration information includes synchronization condition parameters. The terminal device performs evaluation based on the synchronization condition parameters, and in response to that the synchronization conditions are met, the terminal device performs synchronization according to the common handover parameters broadcast in the system information.

Optionally, the terminal device receives synchronization indication information and performs synchronization according to the common handover parameters broadcast in the system information.

Optionally, the terminal device receives the system information via a serving satellite and/or a target satellite.

Optionally, the configuration parameters include at least one of a service link switchover parameter, a common handover parameter, and a measurement configuration.

Optionally, the configuration parameters include at least one of a synchronization condition parameter, a handover parameter, and a measurement report reporting indication.

Optionally, the synchronization condition parameters include at least one of a reference location of at least one neighboring cell, a distance threshold, and ephemeris information.

Optionally, the synchronization parameters include at least one of a random access (RACH-Less) indication, random access parameters, uplink scheduling parameters, and scheduling request resources.

Optionally, the handover parameters include configuration parameters required for handover to a target satellite, for example, RRC configuration parameters and/or RLC configuration parameters and/or MAC configuration parameters and/or physical layer configuration parameters. The handover configuration may be implemented according to existing specification, for example, the reconfigurationWithSync field configuration, and therefore is not described in detail herein.

Optionally, the handover parameters may be delta parameters, and the terminal device performs synchronization according to the existing configuration and applies the corresponding delta configuration.

Optionally, the measurement configuration includes at least one of a measurement report reporting indication, a measurement object, a measurement event, and a report configuration. The measurement configuration may be implemented according to existing specification, and therefore is not described in detail herein.

Optionally, the synchronization indication information includes at least one of RRC signaling, MAC signaling, and/or downlink control information (DCI). The RRC signaling includes at least one of paging, broadcast, and groupcast.

Optionally, the MAC signaling includes at least one of broadcast and groupcast, and is specifically identified and/or indicated via a MAC subheader, a MAC control element (MAC CE), or a combination of a MAC subheader and a MAC CE.

Optionally, the downlink control information includes at least one of broadcast and groupcast, and is specifically scrambled and/or descrambled via a newly introduced DCI format and/or a newly introduced radio network temporary identifier (RNTI), for example, Broadcast-RNTI or Groupcast-RNTI.

Optionally, the synchronization indication information is sent via paging.

Optionally, the paging is indicated by a paging indicator and/or a paging message.

Optionally, the synchronization is synchronization and/or re-synchronization performed with a same base station.

Optionally, meeting synchronization conditions includes that a distance between the terminal device and a first reference location is greater than a first distance threshold and a distance between the terminal device and a second reference location is smaller than a second distance threshold.

Optionally, meeting synchronization conditions includes that a distance between the terminal device and an updated first reference location is greater than a first distance threshold and a distance between the terminal device and an updated second reference location is smaller than a second distance threshold.

Optionally, performing synchronization according to synchronization parameters include performing synchronization based on a current configuration.

Optionally, the system information broadcasts synchronization parameters and/or handover parameters and/or common handover parameters.

Optionally, the system information includes random access parameters.

Optionally, the system information is provided by the same base station.

Optionally, the synchronization is performed between a target satellite and a same base station.

Optionally, the reference location is updated according to ephemeris information.

Optionally, in response to that the measurement report reporting indicates that no reporting is required and the measurement conditions are met, the terminal device sends a random access procedure and/or a scheduling request procedure and/or uplink data to a target satellite.

Optionally, the terminal device reports a measurement report according to the measurement report reporting indication and receives synchronization indication information to perform synchronization.

Optionally, the paging is indicated by a paging indicator and/or a paging message.

Optionally, the synchronization parameters and/or handover parameters in the configuration parameters are distinguished by an index.

Optionally, the paging indicator is indicated by downlink control information carrying a configuration index or identifier.

Optionally, the paging message is indicated by a synchronization indication and/or a configuration index.

Optionally, the terminal device determines the synchronization parameters and/or handover parameters according to the index and performs synchronization using the corresponding synchronization parameters and/or handover parameters.

Optionally, the reference location includes a reference location of a current serving satellite and/or a reference location of an upcoming satellite.

Optionally, the upcoming satellite and the current serving satellite are on the same orbital.

Optionally, the current serving satellite and the upcoming satellite or the target satellite are connected to the same ground station or base station.

In the technical solution of this embodiment, the terminal device performs synchronization based on configuration parameters and/or synchronization indication information and a system information, where the system information carries synchronization parameters. Accordingly, a new handover method is designed for an earth moving cell scenario to reduce signaling overhead caused by reconfiguring CHO parameters and/or to reduce service discontinuity delay.

### Seventh embodiment

As shown in FIG. 11, a seventh embodiment of the present application further provides a processing apparatus, which is applied to a terminal device or serves as the terminal device. The apparatus includes:
an execution module 1101 configured to perform synchronization based on configuration parameters and/or synchronization indication information.

Optionally, the configuration parameters include at least one of the following: service link switchover parameters, common handover parameters, measurement configuration, synchronization condition parameters, synchronization parameters, handover parameters, and measurement report reporting indication.

Optionally, the synchronization condition parameters include at least one of the following: at least one reference location of a neighboring cell, at least one distance threshold, and at least one ephemeris.

Optionally, the synchronization parameters include at least one of the following: random access-free indication, random access parameters, uplink scheduling parameters, and scheduling request resources.

Optionally, the configuration parameters may be formed by any of the above contents and do not necessarily include all contents of one parameter type. For example, the configuration parameters may include at least one reference location of a neighboring cell, at least one distance threshold, and random access parameters, without limitation herein.

Optionally, the handover parameters include configuration parameters required for handover to a target satellite, such as RRC configuration parameters and/or RLC configuration parameters and/or MAC configuration parameters and/or physical layer configuration parameters. The specific implementation of the handover configuration can refer to existing specification, for example, the reconfigurationWithSync field configuration, which is not further detailed herein.

Optionally, the handover parameters may be delta parameters, and the terminal device performs synchronization according to the existing configuration and applies the corresponding delta configuration.

Optionally, the measurement configuration includes a measurement report reporting indication, a measurement object, a measurement event, and a report configuration. The specific implementation can refer to existing specification, which is not further detailed herein.

Optionally, the synchronization indication information includes at least one of the following: RRC signaling, MAC signaling, and/or downlink control information (DCI). The RRC signaling includes at least one of the following: paging, broadcast, and groupcast.

Optionally, the MAC signaling includes at least one of the following: broadcast and groupcast, which are specifically identified and/or indicated via a MAC subheader, a MAC CE, or both the MAC subheader and the MAC CE.

Optionally, the downlink control information includes at least one of the following: broadcast and groupcast, which are specifically scrambled and/or descrambled via a newly introduced DCI format and/or a newly introduced radio network temporary identifier (RNTI), for example, Broadcast-RNTI and Groupcast-RNTI.

Optionally, the apparatus includes at least one of the following:
in response to that the synchronization condition is met, performing synchronization according to the synchronization parameters;
in response to that the synchronization condition is met, applying the handover parameters and performing synchronization according to the synchronization parameters;
based on the synchronization indication information carrying synchronization indication, performing synchronization according to the synchronization parameters;
based on the synchronization indication information carrying synchronization indication and index information, applying the handover parameters and performing synchronization according to the synchronization parameters;
performing synchronization based on the configuration parameters and/or synchronization indication information, and the system information.

Optionally, the apparatus further includes at least one of the following:
the synchronization indication information is sent via paging;
the synchronization is performed with the same base station and/or re-synchronization is performed.

Optionally, the synchronization and/or re-synchronization is a type of handover, for example, the terminal re-establishes a connection with the same base station via a target satellite.

The synchronization based on the configuration parameters and/or synchronization indication information, and the system information includes at least one of the following:
in response to that the synchronization parameters are absent in the configuration parameters and the synchronization condition is met, performing synchronization based on the system information;
in response to that the synchronization parameters are absent in the configuration parameters and the terminal device receives the synchronization indication information, performing synchronization based on the system information;
in response to that the handover parameters are absent in the configuration parameters and the synchronization condition is met, the terminal device performs synchronization based on the system information;
in response to that the handover parameters are absent in the configuration parameters and the terminal device receives the synchronization indication information, the terminal device performs synchronization based on the system information;
in response to that the common handover parameters are absent in the configuration parameters and the synchronization condition is met, the terminal device performs synchronization based on the system information;
in response to that the common handover parameters are absent in the configuration parameters and the terminal device receives the synchronization indication information, the terminal device performs synchronization based on the system information.

Optionally, the absence of the synchronization parameters in the configuration parameters indicates that the network device does not configure any parameter among the synchronization parameters.

Optionally, the synchronization parameters are broadcast and/or configured via the system information.

Optionally, the terminal device performs synchronization based on the system information by performing synchronization according to the synchronization parameters broadcast and/or configured via the system information. For example, the terminal device receives configuration information, where the configuration information includes synchronization condition parameters, and the terminal device performs evaluation according to the synchronization condition parameters. In response to that the terminal device meets the synchronization condition, synchronization is performed according to the synchronization parameters broadcast by the system information.

Optionally, the terminal device receives the synchronization indication information and performs synchronization according to the synchronization parameters broadcast by the system information.

Optionally, the terminal device receives the system information via a serving satellite and/or via a target satellite.

Optionally, the absence of the handover parameters in the configuration parameters indicates that the network device does not configure any parameter among the handover parameters.

Optionally, the handover parameters are not configured via RRC reconfiguration signaling.

Optionally, the handover parameters are broadcast and/or configured via the system information.

Optionally, the terminal device performs synchronization based on the system information by performing synchronization according to the handover parameters broadcast and/or configured via the system information. For example, the terminal device receives configuration information, where the configuration information includes synchronization condition parameters, and the terminal device performs evaluation according to the synchronization condition parameters. When the terminal device meets the synchronization condition, synchronization is performed according to the handover parameters broadcast by the system information.

Optionally, the terminal device receives the synchronization indication information and performs synchronization according to the handover parameters broadcast by the system information.

Optionally, the terminal device receives the system information via a serving satellite and/or via a target satellite.

Optionally, the absence of the common handover parameters in the configuration parameters indicates that the network device does not configure any parameter among the common handover parameters.

Optionally, the common handover parameters are not configured via RRC reconfiguration signaling.

Optionally, the common handover parameters are broadcast and/or configured via the system information.

Optionally, the terminal device performs synchronization based on the system information by performing synchronization according to the common handover parameters broadcast and/or configured via the system information. For example, the terminal device receives configuration information, where the configuration information includes synchronization condition parameters, and the terminal device performs evaluation according to the synchronization condition parameters. In response to that the terminal device meets the synchronization condition, synchronization is performed according to the common handover parameters broadcast by the system information.

Optionally, the terminal device receives the synchronization indication information and performs synchronization according to the common handover parameters broadcast by the system information.

Optionally, the terminal device receives the system information via a serving satellite and/or via a target satellite.

Optionally, the synchronization condition is met in response to that a distance between the terminal device and a first reference location is greater than a first distance threshold, and a distance between the terminal device and a second reference location is smaller than a second distance threshold.

Optionally, the synchronization condition is met in response to that a distance between the terminal device and an updated first reference location is greater than a first distance threshold, and a distance between the terminal device and an updated second reference location is smaller than a second distance threshold.

Optionally, performing synchronization according to the synchronization parameters include performing synchronization based on a current configuration.

Optionally, the system information broadcasts synchronization parameters and/or handover parameters and/or common handover parameters.

Optionally, the system information is provided by the same base station.

Optionally, the synchronization is performed between a target satellite and a same base station.

Optionally, the reference location is updated according to ephemeris information.

Optionally, in response to that the measurement report indicates that no reporting is required and the measurement condition is met, the terminal device sends a random access procedure and/or a scheduling request procedure and/or uplink data to a target satellite.

Optionally, a measurement report is reported according to the measurement report indication, and a synchronization is performed according to received synchronization indication information.

Optionally, the paging is indicated by a paging indicator and/or a paging message.

Optionally, the synchronization parameters and/or the handover parameters in the configuration parameters are distinguished by index.

Optionally, the paging indicator is indicated via downlink control information carrying a configuration index or an identifier.

Optionally, the paging message is indicated via a synchronization indication and/or configuration index.

Optionally, the terminal device determines the synchronization parameters and/or the handover parameters according to the index and performs synchronization using the corresponding synchronization parameters and/or handover parameters.

Optionally, the downlink control information is DCI 1-0 or a newly introduced DCI format.

Optionally, the broadcast signaling and/or groupcast signaling is a newly introduced RRC signaling, which is applicable to the connected state.

Optionally, the MAC signaling is a MAC PDU, where the MAC PDU includes at least one subPDU, and one subPDU includes a subheader and a control element (MAC CE, Control Element).

Optionally, the synchronization indication is carried via the subheader, and the subheader indicates synchronization via an LCID (Logical Channel Identify).

Optionally, the synchronization indication is carried via the MAC CE and is indicated by a bitmap or a codepoint.

Optionally, the configuration parameters further include a reset and/or re-establishment indication, and the terminal device performs reconstruction and/or reset based on the reset and/or re-establishment indication in the configuration parameters.

Optionally, the reset and/or re-establishment indication includes at least one of a MAC reset indication, an RLC re-establishment indication, and a PDCP re-establishment indication.

Optionally, after synchronization is completed, no MAC reset, RLC re-establishment, or PDCP re-establishment is performed.

Optionally, after synchronization is completed, a synchronization completion indication information is sent via one or more of RRC, MAC (such as subheader and/or MAC CE), or UCI. In the technical solution of the present application, the terminal device performs synchronization based on the configuration parameters and/or synchronization indication information. Accordingly, a new handover method is designed for an earth moving cell scenario to reduce frequent configurations by the network device, thereby reducing unnecessary signaling overhead and/or handover delay.

### Eighth embodiment

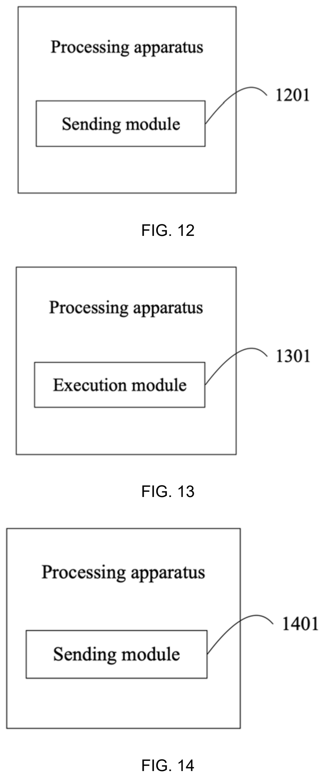

As shown in FIG. 12, in an eighth embodiment of the present application, a processing apparatus is further provided, which is applied to or constitutes a network device. The apparatus includes:
a sending module 1201 configured to send configuration parameters and/or synchronization indication information, so that the terminal device performs synchronization based on the configuration parameters and/or synchronization indication information.

Optionally, the configuration parameters include at least one of: service link switchover parameters, common handover parameters, measurement configuration, synchronization condition parameters, synchronization parameters, handover parameters, and measurement report reporting indication.

Optionally, the synchronization condition parameters include at least one of: at least one reference location of a neighboring cell, at least one distance threshold, and at least one ephemeris information.

Optionally, the synchronization parameters include at least one of: RACH-less indication, random access parameters, uplink scheduling parameters, and scheduling request resources.

Optionally, the configuration parameters may include any of the above contents and are not necessarily required to include all items of a single parameter type. For example, the configuration parameters may include at least one reference location of a neighboring cell, at least one distance threshold, and random access parameters, which are not limited thereto.

Optionally, the handover parameters include configuration parameters required for handover to a target satellite, for example: RRC configuration parameters and/or RLC configuration parameters and/or MAC configuration parameters and/or physical layer configuration parameters. The handover configuration can be implemented by referring to existing specification, for example, the reconfigurationWithSync field configuration, and will not be further described herein.

Optionally, the handover parameters may be delta parameters, and the terminal device performs synchronization based on an existing configuration and applies corresponding delta configurations.

Optionally, the common handover parameters include: common downlink configuration, common uplink configuration, and so on. For example, the ServingCellConfigCommon field configuration, which will not be further described herein.

Optionally, the common handover parameters include part of the handover parameters and form a subset of the handover parameters.

Optionally, the measurement configuration includes a measurement report reporting indication, a measurement object, a measurement event, and a report configuration. The detailed configuration can be implemented by referring to existing specification, and will not be further described herein.

Optionally, the configuration parameters are sent via RRC reconfiguration signaling and/or system information.

Optionally, part of the configuration parameters is sent via RRC reconfiguration signaling and another part is sent via system information. For example, the synchronization condition parameters are sent via RRC reconfiguration signaling, while the common handover parameters are sent via system information, and so on, which will not be further described herein.

Optionally, the synchronization indication information includes at least one of: RRC signaling, MAC signaling, and/or downlink control information (DCI, Downlink Control Information). The RRC signaling includes at least one of: paging, broadcast, and groupcast.

Optionally, the MAC signaling includes at least one of: broadcast and groupcast, and is identified and/or indicated via a MAC subheader, identified and/or indicated via a MAC CE, or identified and/or indicated via both a MAC subheader and a MAC CE.

Optionally, the downlink control information includes at least one of: broadcast and groupcast, and is scrambled and/or descrambled via a newly introduced DCI format and/or a newly introduced radio network temporary identifier (RNTI), for example: Broadcast-RNTI and Groupcast-RNTI.

Optionally, the terminal device performs synchronization based on configuration parameters and/or synchronization indication information, including at least one of the following:
in response to synchronization conditions being met, performing synchronization according to synchronization parameters;
in response to synchronization conditions being met, applying handover parameters and performing synchronization according to synchronization parameters;
based on synchronization indication information carrying a synchronization indication, performing synchronization according to synchronization parameters;
based on synchronization indication information carrying both a synchronization indication and index information, applying handover parameters and performing synchronization according to synchronization parameters;
performing synchronization based on configuration parameters and/or synchronization indication information and system information.

Optionally, the apparatus further includes at least one of the following:
the synchronization indication information is sent via paging;
the synchronization is performed with a same base station and/or resynchronization is performed;
optionally, the synchronization and/or resynchronization is a type of handover, for example, the terminal re-establishes connection with the same base station via a target satellite;
the system information broadcasts synchronization parameters and/or handover parameters;
the system information is sent via a serving satellite and/or a target satellite;
the synchronization based on configuration parameters and/or synchronization indication information and system information includes at least one of the following:
in response to that the synchronization parameters are absent from the configuration parameters and synchronization conditions are met, performing synchronization based on system information;
in response to that the synchronization parameters are absent from the configuration parameters and the terminal device receives synchronization indication information, performing synchronization based on system information.

In response to that the handover parameters are absent from the configuration parameters and synchronization conditions are met, the terminal device performs synchronization based on system information;
in response to that the handover parameters are absent from the configuration parameters and the terminal device receives synchronization indication information, the terminal device performs synchronization based on system information;
in response to that the common handover parameters are absent from the configuration parameters and synchronization conditions are met, the terminal device performs synchronization based on system information;
in response to that the common handover parameters are absent from the configuration parameters and the terminal device receives synchronization indication information, the terminal device performs synchronization based on system information.

Optionally, the absence of synchronization parameters in the configuration parameters indicates that the network device does not configure any synchronization parameter.

Optionally, the synchronization parameters are not configured via RRC reconfiguration signaling.

Optionally, the synchronization parameters are broadcast and/or configured via system information.

Optionally, the terminal device performs synchronization based on system information by implementing synchronization according to synchronization parameters broadcast and/or configured via system information. For example, the terminal device receives configuration information, the configuration information includes synchronization condition parameters. The terminal device performs evaluation according to the synchronization condition parameters, and in response to the terminal device meeting the synchronization conditions, performs synchronization according to the synchronization parameters broadcast via the system information.

Optionally, the terminal device receives synchronization indication information and performs synchronization according to the synchronization parameters broadcast via the system information.

Optionally, the terminal device receives the system information via a serving satellite and/or a target satellite.

Optionally, the absence of handover parameters in the configuration parameters indicates that the network device does not configure any handover parameter.

Optionally, the handover parameters are not configured via RRC reconfiguration signaling.

Optionally, the handover parameters are broadcast and/or configured via system information.

Optionally, the terminal device performs synchronization based on system information by implementing synchronization according to handover parameters broadcast and/or configured via system information. For example, the terminal device receives configuration information, where the configuration information includes synchronization condition parameters. The terminal device performs evaluation according to the synchronization condition parameters, and in response to the terminal device meeting the synchronization conditions, performs synchronization according to the handover parameters broadcast via the system information.

Optionally, the terminal device receives synchronization indication information and performs synchronization according to the handover parameters broadcast via the system information.

Optionally, the terminal device receives the system information via a serving satellite and/or a target satellite.

Optionally, the absence of common handover parameters in the configuration parameters indicates that the network device does not configure any common handover parameter.

Optionally, the common handover parameters are not configured via RRC reconfiguration signaling.

Optionally, the common handover parameters are broadcast and/or configured via system information.

Optionally, the terminal device performs synchronization based on system information by implementing synchronization according to common handover parameters broadcast and/or configured via system information. For example, the terminal device receives configuration information, where the configuration information includes synchronization condition parameters. The terminal device performs evaluation according to the synchronization condition parameters, and in response to the terminal device meeting the synchronization conditions, performs synchronization according to the common handover parameters broadcast via the system information.

Optionally, the terminal device receives synchronization indication information and performs synchronization according to the common handover parameters broadcast via the system information.

Optionally, the terminal device receives the system information via a serving satellite and/or a target satellite.

Optionally, meeting synchronization conditions includes that a distance between the terminal device and a first reference location is greater than a first distance threshold, and a distance between the terminal device and a second reference location is less than a second distance threshold.

Optionally, meeting synchronization conditions includes that a distance between the terminal device and an updated first reference location is greater than a first distance threshold, and a distance between the terminal device and an updated second reference location is less than a second distance threshold.

Optionally, performing synchronization according to synchronization parameters include performing synchronization based on current configurations.

Optionally, the system information broadcasts synchronization parameters and/or handover parameters and/or common handover parameters.

Optionally, the system information is provided by the same base station.

Optionally, the synchronization is performed via a target satellite and a same base station.

Optionally, the reference location is updated according to ephemeris information.

Optionally, the apparatus further includes at least one of the following:
in response to that a measurement report indicates that the no reporting is required and the measurement condition are met, the terminal device sends a random access procedure and/or a scheduling request procedure and/or uplink data to a target satellite;
performing synchronization in response to reporting a measurement report according to a measurement report indication and receiving synchronization indication information;
a paging indicator indicating synchronization via downlink control information carrying configuration indexes or identifiers;
a paging message indicating synchronization via synchronization indications and/or configuration indexes.

In the technical solution of this embodiment, the network device sends configuration parameters and/or synchronization indication information to enable the terminal device to perform synchronization based on the configuration parameters and/or the synchronization indication information. Accordingly, a new handover method is designed for an earth moving cell scenarios, reducing frequent configurations by the network device and thereby decreasing unnecessary signaling overhead and/or handover delay.

### Ninth embodiment

As shown in FIG. 13, in a ninth embodiment of the present application, a processing apparatus is further provided. The apparatus is applied to, or is, a terminal device.

The apparatus includes an execution module 1301 configured to perform synchronization based on configuration parameters and/or synchronization indication information, and system information.

Optionally, the network device sends configuration parameters and/or synchronization indication information together with a system information, the system information carrying synchronization parameters. The terminal device stores the synchronization parameters locally after reception and does not delete the synchronization parameters after performing a handover until the network device modifies or releases them.

Optionally, after receiving the configuration parameters and synchronization parameters, the terminal device stores them locally and performs a handover evaluation according to the configuration parameters and synchronization parameters. When the handover evaluation conditions are met, the terminal device performs a synchronization process.

Optionally, the synchronization process is a re-synchronization process in which the terminal device performs synchronization with the same base station via a new serving satellite.

Optionally, the terminal device performs synchronization based on configuration parameters and/or synchronization indication information and system information, including at least one of the following:
in response to synchronization parameters being absent in the configuration parameters and synchronization conditions being met, the terminal device performs synchronization based on the system information;
in response to synchronization parameters being absent in the configuration parameters and the terminal device receiving synchronization indication information, the terminal device performs synchronization based on the system information.

Optionally, the configuration parameters being absent of synchronization parameters means that the base station does not configure any of the synchronization parameters.

Optionally, the synchronization parameters are broadcast and/or configured via system information.

Optionally, the terminal device performs synchronization based on the synchronization parameters broadcast and/or configured via system information. For example, the terminal device receives configuration information, where the configuration information includes synchronization condition parameters. The terminal device performs an evaluation according to the synchronization condition parameters, and in response to the synchronization conditions being met, performs synchronization based on the synchronization parameters broadcast via system information.

Optionally, the terminal device receives synchronization indication information and performs synchronization according to the synchronization parameters broadcast via system information.

Optionally, the terminal device receives system information via a serving satellite and/or via a target satellite.

Optionally, the configuration parameters include at least one of the following: service link switchover parameters, common handover parameters, and measurement configurations.

Optionally, the configuration parameters include at least one of the following: synchronization condition parameters, handover parameters, and measurement report indication.

Optionally, the synchronization condition parameters include at least one of the following: at least one reference location of neighboring cell, at least one distance threshold, and at least one ephemeris information.

Optionally, the synchronization parameters include at least one of the following: RACH-less indication, random access parameters, uplink scheduling parameters, and scheduling request resources.

Optionally, the handover parameters include configuration parameters required for handover to a target satellite, for example: RRC configuration parameters and/or RLC configuration parameters and/or MAC configuration parameters and/or physical layer configuration parameters. The handover configuration can be implemented according to existing specification, for example, the reconfigurationWithSync field configuration, which will not be further described herein.

Optionally, the handover parameters can be delta parameters, and the terminal device performs synchronization based on existing configurations and applies corresponding delta configurations.

Optionally, the measurement configuration includes at least one of the following: measurement report reporting indication, measurement object, measurement event, and report configuration. The specific implementation can refer to existing specification and will not be further described herein.

Optionally, the synchronization indication information includes at least one of the following: RRC signaling, MAC signaling, and/or downlink control information (DCI). The RRC signaling includes at least one of the following: paging, broadcast, and groupcast.

Optionally, the MAC signaling includes at least one of the following: broadcast and groupcast, which are identified and/or indicated via a MAC subheader, a MAC control element (MAC CE), or both the MAC subheader and the MAC CE.

Optionally, the downlink control information includes at least one of the following: broadcast and groupcast, which are scrambled and/or descrambled via a newly introduced downlink control information format (DCI format) and/or a newly introduced Radio Network Temporary Identifier (RNTI), for example, Broadcast-RNTI and Groupcast-RNTI.

Optionally, the synchronization indication information is sent via paging.

Optionally, the paging is indicated via a paging indicator and/or a paging message.

Optionally, the synchronization is performed with the same base station and/or re-synchronization is performed.

Optionally, the synchronization condition being met includes that the distance between the terminal device and a first reference location is greater than a first distance threshold, and the distance between the terminal device and a second reference location is smaller than a second distance threshold.

Optionally, the synchronization condition being met includes that the distance between the terminal device and an updated first reference location is greater than a first distance threshold, and the distance between the terminal device and an updated second reference location is smaller than a second distance threshold.

Optionally, performing synchronization based on synchronization parameters include performing synchronization based on current configurations.

Optionally, the system information broadcasts synchronization parameters and/or handover parameters.

Optionally, the system information includes random access parameters.

Optionally, the system information is provided by the same base station.

Optionally, the synchronization is performed via the target satellite with the same base station.

Optionally, the reference location is updated according to ephemeris information.

Optionally, in response to that the measurement report indicates that no reporting is required and the measurement condition being met, the terminal device sends a random access procedure and/or a scheduling request procedure and/or uplink data to the target satellite.

Optionally, according to the measurement report indication, the measurement report is reported and synchronization is performed by receiving synchronization indication information.

In the technical solution of this embodiment, the terminal device performs synchronization based on configuration parameters and/or synchronization indication information and a system information, and the system information carries synchronization parameters. Accordingly, a new handover method is designed for an earth moving cell scenario to reduce signaling overhead caused by reconfiguring CHO parameters and/or to reduce service discontinuity delay.

### Tenth embodiment

As shown in FIG. 14, a tenth embodiment of the present application further provides a processing apparatus, which is applied to network equipment or is the network equipment. The apparatus includes:
a sending module 1401 configured to send configuration parameters and/or synchronization indication information and a system information, so that a terminal device performs synchronization based on the configuration parameters and/or the synchronization indication information and the system information, where the system information carries synchronization parameters.

Optionally, the network equipment sends configuration parameters and/or synchronization indication information and a system information, where the system information carries synchronization parameters. After receiving the synchronization parameters, the terminal device stores the synchronization parameters locally and does not delete them after performing a handover until the network equipment modifies or releases them.

Optionally, after receiving the configuration parameters and the synchronization parameters, the terminal device stores them locally and performs handover evaluation according to the configuration parameters and the synchronization parameters. When the handover evaluation conditions are met, a synchronization process is performed.

Optionally, the synchronization process is a re-synchronization process in which the terminal device performs synchronization with the same base station via a new serving satellite.

Optionally, the terminal device performs synchronization based on the configuration parameters and/or synchronization indication information and the system information, including at least one of the following:
in response to that synchronization parameters are absent in the configuration parameters and synchronization conditions are met, synchronization is performed based on the system information;
in response to that synchronization parameters are absent in the configuration parameters and the terminal device receives synchronization indication information, synchronization is performed based on the system information.

Optionally, the configuration parameters are absent synchronization parameters when the base station does not configure any of the synchronization parameters.

Optionally, the synchronization parameters are broadcast and/or configured via system information.

Optionally, synchronization based on the system information means that the terminal device performs synchronization according to synchronization parameters broadcast and/or configured by the system information. For example, the terminal device receives configuration information, and the configuration information includes synchronization condition parameters. The terminal device performs evaluation according to the synchronization condition parameters. In response to that the synchronization conditions are met, synchronization is performed according to the synchronization parameters broadcast by the system information.

Optionally, the terminal device receives synchronization indication information and performs synchronization according to synchronization parameters broadcast by the system information.

Optionally, the terminal device receives the system information via a serving satellite and/or via a target satellite.

Optionally, the configuration parameters include at least one of the following: service link switchover parameters, common handover parameters, and measurement configuration.

Optionally, the configuration parameters include at least one of the following: synchronization condition parameters, handover parameters, and measurement report indication.

Optionally, the synchronization condition parameters include at least one of the following: at least one reference location of a neighboring cell, at least one distance threshold, and at least one ephemeris information.

Optionally, the synchronization parameters include at least one of the following: a RACH-Less indication, random access parameters, uplink scheduling parameters, and scheduling request resources.

Optionally, the handover parameters include configuration parameters required for handover to a target satellite, for example, RRC configuration parameters and/or RLC configuration parameters and/or MAC configuration parameters and/or physical layer configuration parameters. The handover configuration can be implemented by referring to existing specification, such as the configuration of the reconfigurationWithSync field, which is not further described herein.

Optionally, the handover parameters may be delta parameters, and the terminal device performs synchronization based on the existing configuration together with the applied delta configuration.

Optionally, the measurement configuration includes at least one of the following: a measurement report indication, a measurement object, a measurement event, and a report configuration. The implementation can refer to existing specification and will not be described in detail herein.

Optionally, the synchronization indication information includes at least one of the following: RRC signaling, MAC signaling, and/or downlink control information (DCI). The RRC signaling includes at least one of the following: paging, broadcast, and groupcast.

Optionally, the MAC signaling includes at least one of the following: broadcast and groupcast, and is specifically identified and/or indicated via a MAC subheader, identified and/or indicated via a MAC CE, or identified and/or indicated via both the MAC subheader and the MAC CE.

Optionally, the downlink control information includes at least one of the following: broadcast and groupcast, which are specifically scrambled and/or descrambled by a newly introduced downlink control information format (DCI format) and/or a newly introduced Radio Network Temporary Identifier (RNTI), such as a Broadcast-RNTI or a Groupcast-RNTI.

Optionally, the synchronization indication information is sent via paging.

Optionally, the paging is indicated by a paging indicator and/or paging message.

Optionally, the synchronization is synchronization and/or re-synchronization with the same base station.

Optionally, meeting synchronization conditions includes that a distance between the terminal device and a first reference location is greater than a first distance threshold, and a distance between the terminal device and a second reference location is smaller than a second distance threshold.

Optionally, meeting synchronization conditions includes that a distance between the terminal device and an updated first reference location is greater than a first distance threshold, and a distance between the terminal device and an updated second reference location is smaller than a second distance threshold.

Optionally, performing synchronization according to synchronization parameters include performing synchronization based on a current configuration.

Optionally, the system information broadcasts synchronization parameters and/or handover parameters.

Optionally, the system information includes random access parameters.

Optionally, the system information is provided by the same base station.

Optionally, the synchronization is performed between a target satellite and a same base station.

Optionally, the reference location is updated based on ephemeris information.

Optionally, in response to that a measurement report indicates that no reporting is required and measurement conditions are met, the terminal device sends a random access procedure and/or a scheduling request procedure and/or uplink data to the target satellite.

Optionally, the measurement report indicates that a measurement report is to be reported, and synchronization is performed upon receiving synchronization indication information.

In the technical solution of this embodiment, the network device sends configuration parameters and/or synchronization indication information, as well as a system information carrying synchronization parameters, so that the terminal device performs synchronization based on the configuration parameters and/or synchronization indication information and the system information. Accordingly, a new handover method is designed for the earth moving cell scenario to reduce signaling overhead caused by reconfiguring CHO parameters and/or to reduce service discontinuity delay.

An embodiment of the present application further provides a communication system, including the terminal device described in any of the above embodiments, and the network device described in any of the above embodiments.

An embodiment of the present application further provides a communication device, including: a memory, a processor, and a synchronization program stored in the memory and executable on the processor, where the synchronization program is executed by the processor to implement the synchronization method described in any of the above embodiments. The communication device mentioned in the present application may be a terminal (such as a mobile phone) or a network device (such as a base station), and the specific reference needs to be clarified in combination with the context.

An embodiment of the present application further provides a storage medium, on which a computer program is stored. When the computer program is executed by a processor, the synchronization method described in any of the above embodiments is implemented.

In the embodiments of the communication device and the storage medium provided in the present application, all the technical features of any of the above-mentioned synchronization method embodiments may be included, and the expansion and explanation content of the specification are basically the same as those of the embodiments of the above-mentioned methods, and will not be repeated here.

An embodiment of the present application further provides a computer program product, which includes a computer program code. When the computer program code runs on a computer, the computer executes the methods in the above various possible implementation modes.

An embodiment of the present application further provides a chip, including a memory and a processor, the memory is used to store a computer program, and the processor is used to call and run the computer program from the memory, so that a device equipped with the chip executes the methods in various possible implementation modes as described above.

It is understood that the above scenarios are only examples and do not constitute a limitation on the application scenarios of the technical solutions provided in the embodiments of the present application. The technical solutions of the present application can also be applied to other scenarios. For example, it is known to those skilled in the art that with the evolution of the system architecture and the emergence of new business scenarios, the technical solutions provided in the embodiments of the present application are also applicable to similar technical problems.

The serial numbers of the above-mentioned embodiments of the present application are for description only and do not represent the advantages or disadvantages of the embodiments.

The steps in the method of the embodiment of the present application can be adjusted in order, combined and deleted according to actual needs.

The units in the device of the embodiment of the present application can be merged, divided and deleted according to actual needs.

In the present application, the same or similar terminology concepts, technical solutions and/or application scenario descriptions are generally described in detail only the first time they appear. When they appear again later, they are generally not repeated for the sake of brevity. When understanding the technical solutions and other contents of the present application, for the same or similar terminology concepts, technical solutions and/or application scenario descriptions that are not described in detail later, reference can be made to the previous related detailed descriptions.

In the present application, the description of each embodiment has its own emphasis. For the part that is not described or recorded in detail in a certain embodiment, please refer to the relevant description of other embodiments.

The various technical features of the technical solution of this application can be combined arbitrarily. In order to make the description concise, all possible combinations of the various technical features in the above embodiments are not described. However, as long as there is no contradiction in the combination of these technical features, they should be considered to be within the scope of the present application.

Through the description of the above implementation methods, those skilled in the art can clearly understand that the above-mentioned embodiment methods can be implemented by means of software plus a necessary general hardware platform, and of course by hardware, but in many cases the former is a better implementation method. Based on such an understanding, the technical solution of the present application, or the part that contributes to the prior art, can be embodied in the form of a software product, which is stored in a storage medium (such as ROM/RAM, magnetic disk, optical disk) as above, and includes a number of instructions for a terminal device (which can be a mobile phone, a computer, a server, a controlled terminal, or a network device, etc.) to execute the method of each embodiment of the present application.

In the above embodiments, it can be implemented in whole or in part by software, hardware, firmware, or any combination thereof. When implemented using software, it may be implemented in whole or in part in the form of a computer program product. The computer program product includes one or more computer instructions. When computer program instructions are loaded and executed on a computer, processes or functions according to embodiments of the present application are generated in whole or in part. The computer may be a general purpose computer, a special purpose computer, a computer network, or other programmable device. The computer instruction may be stored in or transmitted from one computer-readable storage medium to another computer-readable storage medium. For example, the computer instruction may be transmitted by wired (e.g., coaxial cable, optical fiber, digital subscriber line) or wireless (e.g., infrared, wireless, microwave, etc.) means from one website, computer, server, or data center to another website, computer, server, or data center. Computer-readable storage media can be any available media that can be accessed by a computer or a data storage device such as a server, data center, or other integrated media that contains one or more available media. Available media may be magnetic media (e.g., floppy disk, storage disk, tape), optical media (e.g., DVD), or semiconductor media (e.g., Solid State Disk (SSD)), etc.

The above are only some embodiments of the present application, and are not intended to limit the scope of the present application. Any equivalent structure or equivalent process transformation made using the contents of the specification and drawings of the present application, or directly or indirectly applied in other related technical fields, shall be similarly included in the scope of the present application.

## Claims

1. A synchronization method, **characterized by** comprising:
S20, performing re-synchronization based on configuration parameters via a target satellite and a same base station.

2. The method according to claim 1, wherein the configuration parameters comprise at least one of the following: re-synchronization condition parameters.

3. The method according to claim 2, further comprising at least one of the following:
the re-synchronization condition parameters comprising at least one of:
at least one reference location of at least one neighboring cell, at least one distance threshold, and at least one ephemeris information.

4. The method according to claim 2, wherein the S20 comprises at least one of the following:
in response to that re-synchronization conditions are met, performing re-synchronization according to the re-synchronization parameters;
in response to that re-synchronization conditions are met, applying the handover parameters and performing re-synchronization via the re-synchronization parameters;
performing re-synchronization according to the re-synchronization parameters based on the re-synchronization indication information carrying a re-synchronization indicator;
applying the handover parameters and performing re-synchronization via the re-synchronization parameters based on the re-synchronization indication information carrying the re-synchronization indicator and index information; and
performing re-synchronization based on the configuration parameters and/or re-synchronization indication information and system information.

5. The method according to claim 4, further comprising at least one of the following:
the re-synchronization indication information being sent via paging;
the re-synchronization being performing re-synchronization with a same base station; and
the performing re-synchronization based on the configuration parameters and/or re-synchronization indication information and system information comprises at least one of the following:
in response to that re-synchronization parameters are absent from the configuration parameters and the re-synchronization conditions are met, performing re-synchronization based on the system information; and
in response to that the re-synchronization parameters are absent from the configuration parameters and a terminal device receives re-synchronization indication information, performing re-synchronization based on the system information.

6. The method according to claim 5, further comprising at least one of the following:
the system information broadcasting the re-synchronization parameters and/or the handover parameters; and
the system information being sent via a serving satellite and/or a target satellite.

7. The method according to claim 4, further comprising at least one of the following:
in response to that a measurement report indicates that no reporting is required and measurement conditions are met, sending, by a terminal device, a random access procedure and/or a scheduling request procedure and/or an uplink data to a target satellite;
reporting a measurement report according to the measurement report indication and receiving the re-synchronization indication information to perform re-synchronization;
a paging indicator being indicated by downlink control information (DCI) carrying a configuration index or identifier; and
paging message being indicated by the re-synchronization indicator and/or the configuration index.

8. A synchronization method, **characterized by** comprising:
S10, sending configuration parameters and/or re-synchronization indication information so that a terminal device performs re-synchronization based on the configuration parameters and/or the re-synchronization indication information.

9. The method according to claim 8, wherein the configuration parameters comprise at least one of the following:
service link switchover parameters;
common handover parameters;
measurement configuration;
re-synchronization condition parameters;
re-synchronization parameters;
handover parameters; and
measurement report reporting indication.

10. The method according to claim 9, further comprising at least one of the following:
the re-synchronization condition parameters comprising at least one of:
at least one reference location of at least one neighboring cell, at least one distance threshold, and at least one ephemeris information;
the re-synchronization parameters comprising at least one of:
a random access channel-less (RACH-Less) indication, a random access parameter, an uplink scheduling parameter, and a scheduling request resource; and
the configuration parameters being updated parameters or locally stored parameters.

11. The method according to claim 10, wherein the terminal device performing re-synchronization based on the configuration parameters and/or the re-synchronization indication information comprises at least one of the following:
in response to that re-synchronization conditions are met, performing re-synchronization according to the re-synchronization parameters;
in response to that re-synchronization conditions are met, applying the handover parameters and performing re-synchronization via the re-synchronization parameters;
performing re-synchronization according to the re-synchronization parameters based on the re-synchronization indication information carrying a re-synchronization indicator;
applying the handover parameters and performing re-synchronization via the re-synchronization parameters based on the re-synchronization indication information carrying the re-synchronization indicator and index information; and
performing re-synchronization based on the configuration parameters and/or re-synchronization indication information and system information.

12. The method according to claim 11, further comprising at least one of the following:
the re-synchronization indication information being sent via paging;
the re-synchronization being performing re-synchronization with a same base station;
the system information broadcasting the re-synchronization parameters and/or the handover parameters;
the system information being sent via a serving satellite and/or a target satellite; and
the performing re-synchronization based on the configuration parameters and/or re-synchronization indication information and system information comprises at least one of the following:
in response to that re-synchronization parameters are absent from the configuration parameters and the re-synchronization conditions are met, performing re-synchronization based on the system information; and
in response to that the re-synchronization parameters are absent from the configuration parameters and a terminal device receives re-synchronization indication information, performing re-synchronization based on the system information.

13. The method according to claim 11, further comprising at least one of the following:
in response to that a measurement report indicates that no reporting is required and measurement conditions are met, sending, by a terminal device, a random access procedure and/or a scheduling request procedure and/or an uplink data to a target satellite;
reporting a measurement report according to the measurement report indication and receiving the re-synchronization indication information to perform re-synchronization;
a paging indicator being indicated by DCI carrying a configuration index or identifier; and
paging message being indicated by the re-synchronization indicator and/or the configuration index.

14. A communication device, **characterized by** comprising: a memory and a processor, wherein a synchronization program is stored in the memory, and when the synchronization program is executed by the processor, the synchronization method according to claims 1 or 8 is implemented.

15. A storage medium, **characterized in that** a computer program is stored in the storage medium, and when the computer program is executed by a processor, the synchronization method according to claims 1 or 8 is implemented.
